# EUROPEAN PATENT SPECIFICATION

(11) **EP 0 691 883 B1**
(45) Date of publication and mention of the grant of the patent: **12.02.2003**
(21) Application number: 94911401.1
(22) Date of filing: 15.02.1994
(51) Int. Cl.: B01D 53/72, B01J 37/02, B01J 23/10

(54) **IMPROVED ZEOLITE-CONTAINING OXIDATION CATALYST AND METHOD OF USE**
VERBESSERTER ZEOLITH ENTHALTENDER OXIDATIONSKATALYSATOR UND VERFAHREN ZU SEINER ANWENDUNG
CATALYSEUR D'OXYDATION AMELIORE CONTENANT UNE ZEOLITHE ET METHODE D'UTILISATION

(30) Priority: 29.03.1993 US 38378
(43) Date of publication of application: 17.01.1996
(73) Proprietor: ENGELHARD CORPORATION, Iselin, New Jersey 08830-0770 (US)
(72) Inventor: YAVUZ, Bulent, O., Plainfield, NJ 07060 (US); VOSS, Kenneth, E., Somerville, NJ 08876 (US); DEEBA, Michel, North Brunswick, NJ 08902 (US); ADOMAITIS, John, R., Old Bridge, New Jersey 08857 (US); FARRAUTO, Robert, J., Westfield, NJ 07091 (US)
(74) Representative: Fisher, Adrian John
(86) International application number: US9401926
(87) International publication number: WO94022564

(56) References cited:
- EP-A- 0 404 385
- EP-A- 0 499 931
- EP-A- 0 508 513
- EP-A- 0 559 021

## Description

### BACKGROUND OF THE INVENTION

### Field of the Invention

This invention relates to a catalyst composition and method for the oxidation of oxidizeable components of diesel engine exhaust, and more specifically to the treatment of such diesel exhaust to reduce the content of particulates and other pollutants discharged to the atmosphere.

### Background and Related Art

As is well-known, diesel engine exhaust is a heterogeneous material which contains not only gaseous pollutants such as carbon monoxide ("CO") and unburned hydrocarbons ("HC"), but also soot particles which comprise both a dry, solid carbonaceous fraction and a soluble organic fraction. The soluble organic fraction is sometimes referred to as a volatile organic fraction ("VOF"), which terminology will be used herein. The VOF may exist in diesel exhaust either as a vapor or as an aerosol (fine droplets of liquid condensate) depending on the temperature of the diesel exhaust.
Oxidation catalysts comprising a platinum group metal dispersed on a refractory metal oxide support are known for use in treating the exhaust of diesel engines in order to convert both HC and CO gaseous pollutants and particulates, i.e., soot particles, by catalyzing the oxidation of these pollutants to carbon dioxide and water. One problem faced in the treatment of diesel engine exhaust is presented by the presence of sulfur in diesel fuel. Upon combustion, sulfur forms sulfur dioxide and the oxidation catalyst catalyzes the SO₂ to SO₃ ("sulfates") with subsequent formation of condensible sulfur compounds, such as sulfuric acid, which condense upon, and thereby add to, the mass of particulates. The sulfates also react with activated alumina supports to form aluminum sulfates, which render activated alumina-containing catalysts inactive. In this regard, see U.S. Patent 4,171,289 at column 1, line 39 et seq. Previous attempts to deal with the sulfation problem include the incorporation of large amounts of sulfate-resistant materials such as vanadium oxide into the support coating, or the use of alternative support materials such as α-alumina (alpha), silica and titania, which are sulfate-resistant materials.
The prior art also shows an awareness of the use of zeolites, including metal-doped zeolites, to treat diesel exhaust. For example, U.S. Patent 4,929,581 discloses a filter for diesel exhaust, in which the exhaust is constrained to flow through the catalyst walls to filter the soot particles. A catalyst comprising a platinum group metal-doped zeolite is dispersed on the walls of the filter to catalyze oxidation of the soot to unplug the filter.
As is well-known in the art, catalysts used to treat the exhaust of internal combustion engines are less effective during periods of relatively low temperature operation, such as the initial cold-start period of engine operation, because the engine exhaust is not at a temperature sufficiently high for efficient catalytic conversion of noxious components in the exhaust. To this end, it is known in the art to include an adsorbent material, which may be a zeolite, as part of a catalytic treatment system in order to adsorb gaseous pollutants, usually hydrocarbons, and retain them during the initial cold-start period. As the exhaust gas temperature increases, the adsorbed hydrocarbons are driven from the adsorbent and subjected to catalytic treatment at the higher temperature. In this regard, see for example U.S. Patent 5,125,231 which discloses (columns 5-6) the use of platinum group metal-doped zeolites as low temperature hydrocarbon adsorbents as well as oxidation catalysts.

EP-A-0559021 describes a catalyst composition having a first coating containing cerium oxide of large surface area and being a carrier for at least platinum and iridium and a second coating on the first coating of a temperature stable mordenite zeolite containing copper and/or iron.

EP-A-0508513 discloses a method for treating exhaust from a diesel internal combustion engine in which at least a portion of condensate hydrocarbons such as high molecular weight hydrocarbons in the exhaust is cracked by contacting with a catalytic material. The catalytic material comprises solid acid material having hydrogen cations releasably retained at acidic sites. Examples of such solid acid material include crystalline aluminosilicates, for example, Y-type zeolite, and mixed oxides containing silica in combination with one or more of alumina, magnesia, titania, lanthania, zirconia and ceria.

EP-A-0499931 describes a catalytic method for removing particulate matter from the exhaust of a diesel engine employing a catalyst containing a zeolite.

EP-A-0404385 describes a catalyst for the oxidation of carbonaceous particulates carried in gaseous phase for example for the treatment of diesel engine exhaust emissions. The catalyst comprises a substrate coated with a high surface area ceramic oxide, cerium IV oxide and a compound such as an oxide, carbonate or nitrate of an element of Group 1A of the Periodic Table.

### SUMMARY OF THE INVENTION

Generally, in accordance with the present invention, there is provided a catalyst composition and a method for oxidizing oxidizeable components of diesel engine exhaust in which at least some of volatile organic fraction of the diesel exhaust is converted to innocuous materials, and in which gasesous HC and CO pollutants may also be similarly converted. The objectives of the invention are attained by an oxidation catalyst comprising a catalytic material comprising a mixture of high surface area ceria, a zeolite and, optionally, a high surface area alumina. The zeolite of the catalyst composition is doped, e.g., ion-exchanged, with a catalytic moiety selected from platinum, rhodium, palladium, ruthenium, osmium, iridium, chromium, vanadium, copper, nickel, iron and mixtures thereof. The method of the invention is attained by flowing a diesel engine exhaust, e.g., the exhaust of a diesel-powered automobile or light truck, into contact under oxidation reaction conditions with a catalyst composition of the present invention.

According to a first aspect of the present invention there is provided a catalyst composition for treating a diesel engine exhaust stream containing a volatile organic fraction comprising a refractory carrier on which is disposed a coating of a catalytic material comprising a catalytically effective amount of ceria having a BET surface area of at least about 10 m²/g and a catalytically effective amount of a zeolite wherein the zeolite is doped with a catalytic moiety selected from the group consisting of one or more of platinum, rhodium, palladium, ruthenium, osmium, iridium, copper, iron, nickel, chromium and vanadium, the coating comprising the ceria and the zeolite admixed together or the zeolite being disposed in a discrete layer which is overlain by one or more layers containing the ceria and a catalytically effective amount of alumina having a BET surface area of at least about 10 m²/g. The zeolite can comprise Beta zeolite.

According to a second aspect of the present invention there is provided a catalyst composition for treating a diesel engine exhaust stream containing a volatile organic fraction comprising a refractory carrier on which is disposed a coating of a catalytic material comprising a catalytically effective amount of ceria having a BET surface area of at least about 10 m²/g and a catalytically effective amount of a zeolite wherein the zeolite includes Beta zeolite and is doped with a catalytic moiety selected from the group consisting of one or more of platinum, rhodium, palladium, ruthenium, osmium, iridium, copper, iron, nickel, chromium and vanadium.

In each aspect of the present invention the zeolite can be selected from the group consisting of Y-zeolite, pentasil e.g. ZSM-5, mordenite, and mixtures thereof.

The zeolite preferably comprises a three-dimensional zeolite having pore openings whose smallest cross-sectional dimension is at least about 5 Angstroms and having a silicon to e.g., ion-exchanged, with a catalytic moiety selected from platinum, rhodium, palladium, ruthenium, osmium, iridium, chromium, vanadium, copper, nickel, iron and mixtures thereof. The method of the invention is attained by flowing a diesel engine exhaust, e.g., the exhaust of a diesel-powered automobile or light truck, into contact under oxidation reaction conditions with a catalyst composition of the present invention.

According to a first aspect of the present invention there is provided a catalyst composition for treating a diesel engine exhaust stream containing a volatile organic fraction comprising a refractory carrier on which is disposed a coating of a catalytic material comprising a catalytically effective amount of ceria having a BET surface area of at least about 10 m²/g and a catalytically effective amount of a zeolite wherein the zeolite is doped with a catalytic moiety selected from the group consisting of one or more of platinum, rhodium, palladium, ruthenium, osmium, iridium, copper, iron, nickel, chromium and vanadium.

The catalyst composition can further include a catalytically effective amount of alumina having a BET surface area of at least about 10 m²/g.

The coating comprising the ceria and the zeolite can be admixed together or the zeolite can be disposed in a discrete layer which is overlain by one or more layers containing the ceria and a catalytically effective amount of alumina having a BET surface area of at least about 10 m²/g.

The zeolite can comprise Beta zeolite and/or the zeolite can be selected from the group consisting of Y-zeolite, pentasil e.g. ZSM-5, mordenite, and mixtures thereof.

The zeolite preferably comprises a three-dimensional zeolite having pore openings whose smallest cross-sectional dimension is at least about 5 Angstroms and having a silicon to aluminum atomic ratio ("Si:Al atomic ratio") of greater than 5, e.g., a Si:Al atomic ratio of from about 5 to 400.

Suitably, the zeolite comprises from about 10 to 90, preferably from about 20 to 70, percent by weight, the alumina comprises from about 60 to 5, preferably from about 50 to 20, percent by weight, and the ceria comprises from about 60 to 5, preferably from about 50 to 20, percent by weight, of the combined weight of the zeolite, the alumina and the ceria.

The zeolite is doped with a catalytic moiety, e.g., ion-exchanged or impregnated, which can be an ion or a neutral metal-containing species. The catalytic moiety is preferably one or both of platinum and iron. The zeolite can additionally be doped with hydrogen.

Preferably the catalyst composition comprises zeolite doped with a catalytic moiety selected from the group consisting of one or both of platinum and iron. Suitably the zeolite is doped with the catalytic moiety by ion-exchanging the zeolite with cationic catalytic moiety.

A catalyst composition of the present invention can further include a catalytically effective amount of alumina having a BET surface area of at least about 10 m²/g.

Preferably in the present catalyst composition the ceria and, if present, the alumina each has a BET surface area of from about 25 m²/g to about 200 m²/g.

Suitably the ceria and, if present, the alumina are bulk ceria and bulk alumina respectively.

At least one catalytic metal moiety selected from the group consisting of platinum and palladium can be dispersed on the zeolite, the ceria and/or the alumina.

A preferred composition for treating a diesel engine exhaust stream comprises a catalytic material comprising bulk ceria having a BET surface area of at least about 10 m²/g, bulk ceria and iron Beta zeolite.

Preferably, the refractory carrier has a plurality of parallel exhaust flow passages extending therethrough and defined by passage walls on which the catalytic material is coated, and further comprising either dispersed platinum carried on the catalytic material in an amount of from about 3.5 (0.1) to about 2119 (60), e.g., 3.5 (0.1) to 529.7 (15), preferably 3.5 (0.1) to 176.5 (5), µg/cm³ (g/ft³) or dispersed palladium carried on the catalytic material in a quantity of from about 3.5 (0.1) to 7063 (200), preferably 706.3 (20) to 4238 (120), µg/cm³ (g/ft³).

In a catalyst composition embodying the present invention, the refractory carrier can have a plurality of parallel exhaust flow passages extending therethrough and be defined by passage walls on which the catalytic material is coated, wherein the ceria and alumina each has a BET surface area of from about 25 m²/g.

In a preferred embodiment, a catalyst composition for treating a diesel engine exhaust stream containing hydrocarbons selected from the group consisting of gaseous hydrocarbons and hydrocarbons present in the volatile organic fraction comprises a refractory carrier on which is disposed a coating of a catalytic material comprising ceria having a BET surface area of at least about 10 m²/g and zeolite wherein the zeolite is doped with a catalytic metal moiety selected from the group consisting of platinum and palladium, and with a base metal moiety or hydrogen where the base metal moiety is selected from the group consisting of copper, iron, nickel, chromium and vanadium.

In a preferred embodiment the refractory carrier has a plurality of parallel exhaust flow passages extending therethrough and is defined by passage walls on which the catalytic material is coated, and the catalytic moiety comprises platinum and is present in a quantity sufficient to provide from about 176.5 to 2188.8 µg/cm³ (5 to 60 g/ft³) of platinum. Alternatively in such preferred embodiment, the catalytic moiety comprises from about 70.6 to 2188.8 µg/cm³ (2 to 60 g/ft³) platinum and from about 176.5 to 1765.7 µg/cm³ (5 to 50 g/ft³) iron.

Suitably the refractory carrier has a plurality of parallel exhaust flow passages extending therethrough and defined by passage walls on which the catalytic material is coated, and the catalyst composition preferably comprises a dispersed platinum carried on the catalytic material in an amount of from about 3.5 to about 2118.8 µg/cm³ (about 0.1 to about 60 g/ft³). Preferably the dispersed platinum is present in the amount of from about 3.5 to 176.5 µg/cm³ (0.1 to 5 g/ft³). Suitably at least a catalytically effective amount of the dispersed platinum is carried on the ceria.

Suitably the refractory carrier has a plurality of parallel exhaust flow passages extending therethrough and defined by passage walls on which the catalytic material is coated and the catalyst composition preferably comprises dispersed palladium carried on the catalytic material in a quantity of from 3.5 to 7062.9 µg/cm³ (0.1 to 200 g/ft³). Preferably the dispersed palladium is present in an amount of from about 706.2 to 4237.7 µg/cm³ (20 to 120 g/ft³).

In accordance with the method aspect of the present invention, there is provided a method for treating a diesel engine exhaust stream containing a volatile organic fraction, the method comprising contacting the stream with any of the catalyst compositions described above under oxidizing conditions including a temperature high enough to catalyze oxidation of at least some of the volatile organic fraction. For example, the temperature of the exhaust stream initially contacted with the catalyst composition may be from about 100°C to 800°C.

Suitably the present method for treating a diesel engine exhaust stream comprising hydrocarbons selected from the group consisting of gaseous hydrocarbons and hydrocarbons present in a volatile organic fraction further comprises the steps of:
absorbing at least some of the hydrocarbons on the catalyst;
increasing the temperature of the exhaust gas and desorbing the hydrocarbons from the catalyst; and
catalysing the oxidation of at least some of the hydrocarbons.

### DEFINITIONS

As used herein and in the claims, the following terms shall have the indicated meanings.
The term "BET surface area" has its usual meaning of referring to the Brunauer, Emmett, Teller method for determining surface area by N₂ adsorption. Unless otherwise specifically stated, all references herein to the surface area of a ceria, alumina or other component refer to the BET surface area.
The term "activated alumina" has its usual meaning of a high BET surface area alumina, comprising primarily one or more of γ-, θ- and δ-aluminas (gamma, theta and delta).
The term "catalytically effective amount" means that the amount of material present is sufficient to affect the rate of reaction of the oxidation of pollutants in the exhaust being treated.
The term "inlet temperature" shall mean the temperature of the exhaust, test gas or other stream being treated immediately prior to initial contact of the exhaust, test gas or other stream with the catalyst composition.
The term "doped" used to refer to a zeolite being doped with a metal or hydrogen, and the terms "dope" or "doping" used in the same context, means that the metal or hydrogen moiety is incorporated within the pores of the zeolite, as distinguished from being dispersed on the surface of the zeolite but not to any significant degree within the pores of the zeolite. Doping of a zeolite is preferably carried out by known ion-exchange techniques in which a zeolite is repeatedly flushed with a solution containing metal cations (or an acid to provide hydrogen ions), or the zeolite pores are flooded with such solution. However, the defined terms include any suitable technique for incorporating a catalytic moiety, e.g., one or more metals as ions or neutral metal-containing species or hydrogen ions, within the pores of the zeolite, especially by exchange or replacement of cations of the zeolite.
The term "washcoat" refers to a thin, adherent coating of a material, such as the catalytic material of the present invention, disposed on the walls forming the parallel gas flow passages of a carrier, which is typically made of a refractory material such as cordierite or other oxide or oxide mixture, or a stainless steel.
Reference herein or in the claims to ceria or alumina being in "bulk" form means that the ceria or alumina is present as discrete particles (which may be, and usually are, of very small size, e.g., 10 to 20 microns in diameter or even smaller) as opposed to having been dispersed in solution form into another component. For example, the thermal stabilization of ceria particles (bulk ceria) with alumina as described in U.S. Patent 4,714,694, results in the alumina being dispersed into the ceria particles and does not provide the dispersed alumina in "bulk" form, i.e., as discrete particles of alumina.
The abbreviation "TGA" stands for thermogravimetric analysis, which is a measure of the weight change (e.g., weight loss) of a sample as a function of temperature and/or time. The abbreviation "DTA" stands for differential thermal analysis, which is a measure of the amount of heat emitted (exotherm) or absorbed (endotherm) by a sample as a function of temperature and/or time.

### BRIEF DESCRIPTION OF THE DRAWINGS

Figures 1-5 show graphically the results of the engine test of the catalysts of Example 1, set forth numerically in TABLE I-B: specifically;
Figure 1 is a plot of gas-phase HC conversion for sample E-1 and comparative samples C-1, C-2 and C-3 as a function of catalyst inlet temperature;
Figure 2 is a plot of carbon monoxide conversion for samples E-1 and C-3 as a function of catalyst inlet temperature;
Figure 3 is a plot of VOF removal for samples E-1 and C-3 as a function of catalyst inlet temperature;
Figure 4 is a plot of the reduction of the total mass of particulates (TMP) for samples E-1 and C-3 as a function of catalyst inlet temperature;
Figure 5 is a plot of SO₃ and H₂O emissions for samples E-1 and C-3 and for untreated exhaust as a function of catalyst inlet temperature;
Figures 6-9 are plots of hydrocarbon, SO₂ and CO conversion for samples E-2, E-3 and C-4 of Example 2: specifically;

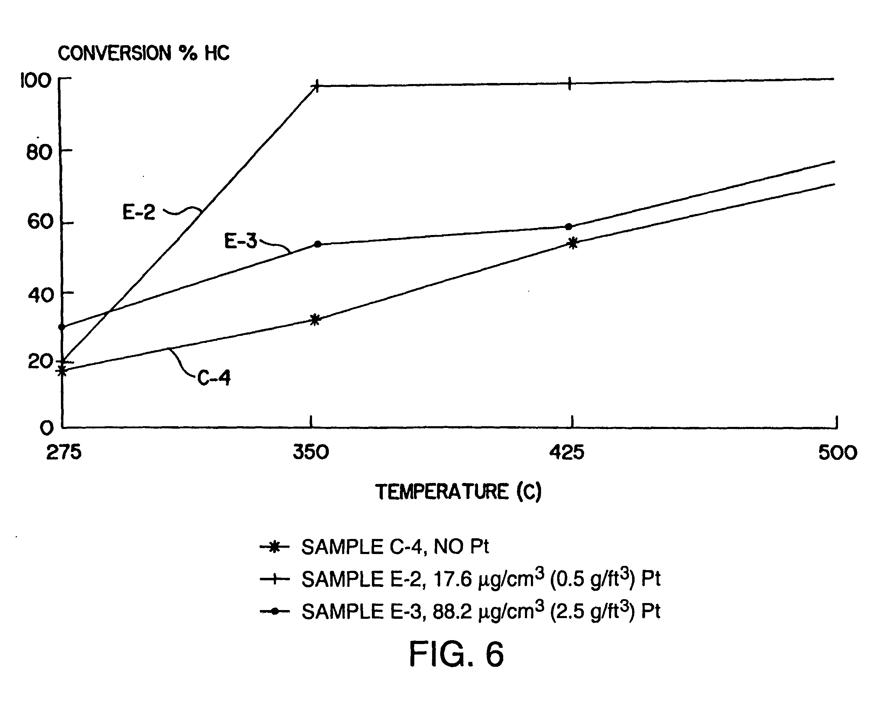

Figure 6 is a plot of gas-phase hydrocarbon conversion as a function of catalyst inlet temperature at 50,000 space velocity for samples E-2, E-3 and C-4;

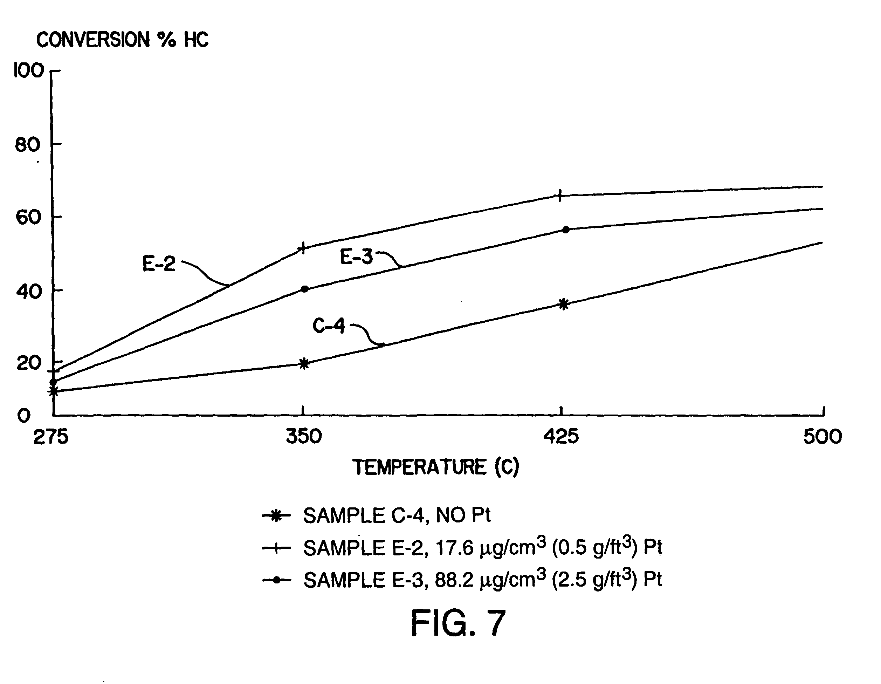

Figure 7 is a plot of gas-phase hydrocarbon conversion as a function of catalyst inlet temperature at 90,000 space velocity for samples E-2, E-3 and C-4;

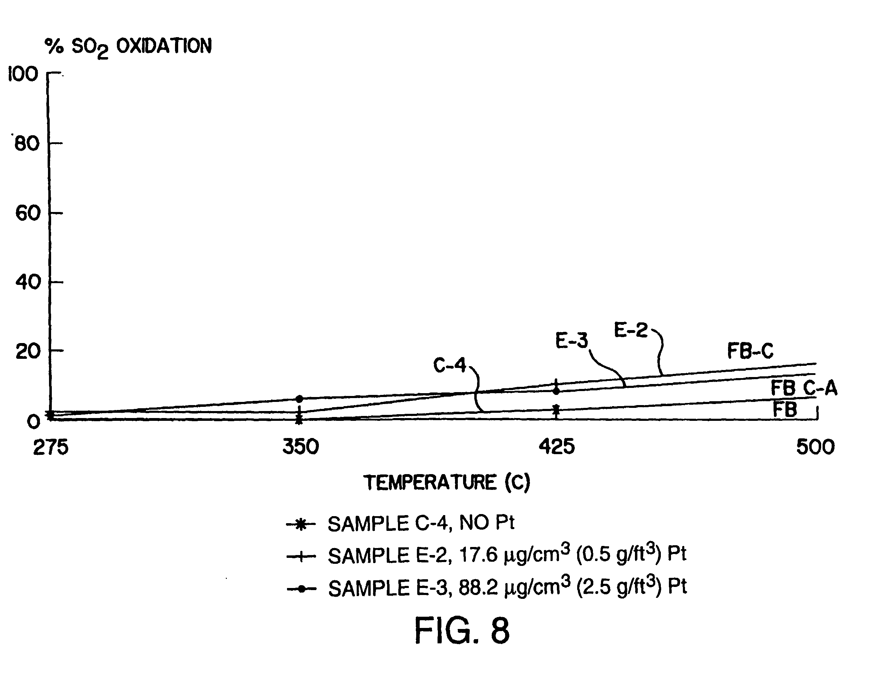

Figure 8 is a plot of SO₂ conversion as a function of catalyst inlet temperature at 90,000 space velocity for samples E-2, E-3 and C-4;

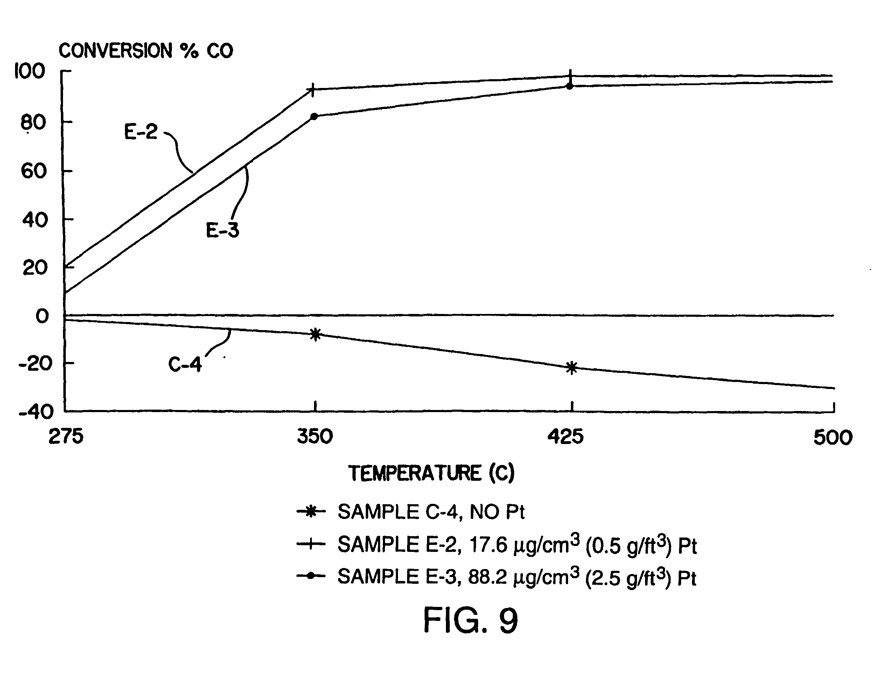

Figure 9 is a plot of CO conversion as a function of catalyst inlet temperature at 90,000 space velocity for samples E-2, E-3 and C-4; and

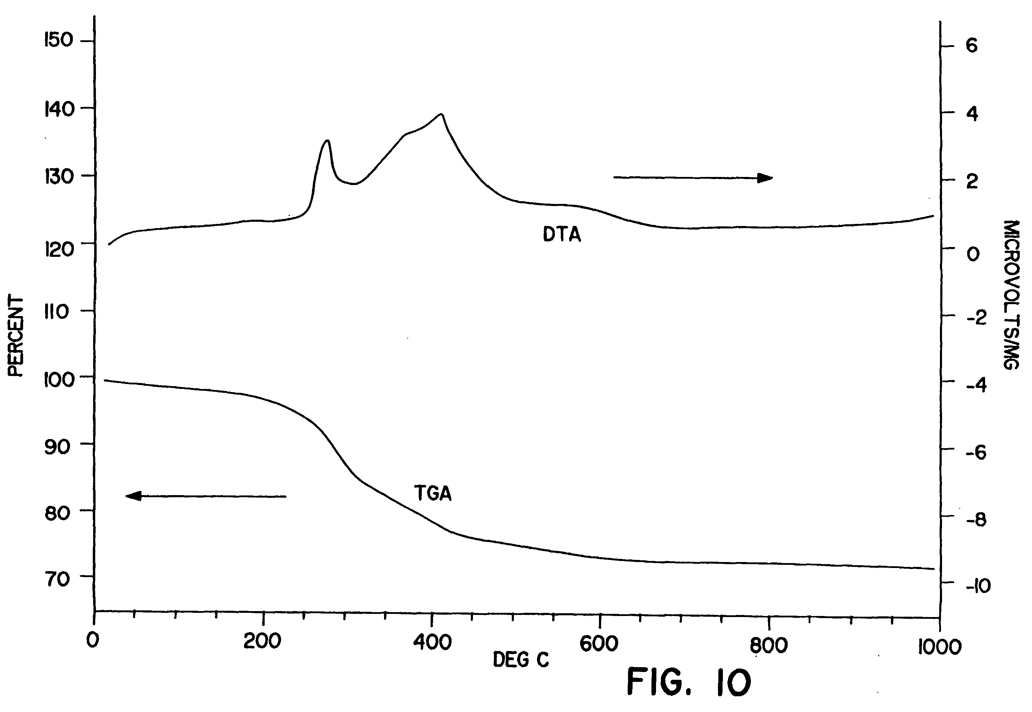

Figure 10 is an exemplary TGA/DTA plot of sample E-8 of Example 5.

### DETAILED DESCRIPTION OF THE INVENTION AND PREFERRED EMBODIMENTS THEREOF

The present invention provides an oxidation catalyst composition which is effective for treating diesel engine exhaust, particularly with regard to reducing the total particulates and HC and CO content of the exhaust. The carbonaceous particulates ("soot") component of diesel engine exhaust is, as discussed above, known to be comprised of relatively dry carbonaceous particulates and a volatile organic fraction ("VOF") comprising high molecular weight hydrocarbons resulting from unburned and partially burned diesel fuel and lubricating oil. The VOF is present in the diesel exhaust as either a vapor phase or a liquid phase, or both, depending on the temperature of the exhaust. Generally, it is not feasible to attempt to remove or treat the dry, solid carbonaceous particulates component of the total particulates by catalytic treatment, and it is the VOF component which can be most effectively removed by conversion via utilization of an oxidation catalyst. Therefore, in order to reduce the total particulates discharged so as to meet present and impending Government regulations concerning maximum allowable total particulates, the volatile organic fraction, or at least a portion thereof, must be oxidized to innocuous CO₂ and H₂O by being contacted with an oxidation catalyst under suitable reaction conditions. The required U.S. Government limits for 1991 on HC, CO, nitrogen oxides ("NOₓ") and total particulate emissions ("TPM") in diesel engine exhaust have been largely met by suitable engine design modifications. For 1994 the HC, CO and NOₓ limits remain unchanged from 1991 standards but the upper limit on TPM will be reduced from the 1991 level of 0.25 grams per horsepower-hour ("g/HP-hr") to 0.10 g/HP-hr. Although the oxidation catalysts of the present invention, when employed as a diesel exhaust treatment catalyst, are effective for effectuating a reduction in total particulates, they are also capable, especially with the optional addition of platinum or other catalytic metals as described below, of providing the added advantage of also oxidizing a portion of the HC and CO contained in the gaseous component of the diesel engine exhaust. When sulfur or sulfur compounds are present in the exhaust in significant quantities, platinum is eliminated or used in limited amounts so as not to promote the unwanted effect of excessive oxidation of SO₂ to SO₃.
Further, the zeolite component of the present invention is able to trap hydrocarbon molecules which might otherwise, during periods when the exhaust gas is relatively cool, escape untreated from the catalyst. It is believed that the trapped hydrocarbons are either oxidized within the zeolite or released from the zeolite only when the temperature of the catalyst composition is high enough to effectively catalyze oxidation of the trapped hydrocarbons, or both.
A basic and novel characteristic of the present invention is believed to reside in a catalyst composition comprising the defined combination of ceria, doped zeolite and, optionally, alumina, and one or both of the optional dispersal of the catalytic metals and platinum or palladium as part of the composition and in the use thereof to treat diesel exhaust streams.
As noted above, the bulk ceria and the bulk alumina may each have a surface area of at least about 10 m²/g, for example, at least about 20 m²/g. Typically, the bulk alumina may have a surface area of from about 120 to 180 m²/g and the bulk ceria may have a surface area of from about 70 to 150 m²/g. The fact that a diesel oxidation catalyst composition which may contain activated alumina as a major component thereof has proven to be successful is in itself surprising, in view of the consensus of the prior art that alumina, if used at all in diesel oxidation catalysts, must be a low surface area alumina (α-alumina) and/or be used in conjunction with sulfate-resistant refractory metal oxides such as zirconia, titania or silica. It has nonetheless been found that in accordance with the present invention, surprisingly, a catalyst composition comprising a combination of high surface area ceria, a suitable zeolite, and, optionally, high surface area alumina, provides a catalytic material which effectively catalyzes the oxidation of the volatile organic fraction so as to provide a significant reduction in total particulates in diesel engine exhaust and is capable of adsorbing and catalyzing the combustion of gaseous hydrocarbons. It should be noted that the prior art generally considers refractory base metal oxides used in diesel oxidation catalysts to be merely supports for the dispersal thereon of catalytically active metals such as platinum group metals. In contrast, the present invention teaches that a catalytic material comprising ceria and, optionally, alumina of sufficiently high surface area (10 m²/g or higher) and zeolite, dispersed on a suitable carrier, provides a durable and effective diesel oxidation catalyst.
It has further been found that beneficial effects are attained by the optional incorporation of platinum or palladium in the catalyst composition, provided that in the case of platinum, the platinum is present at loadings much lower than those conventionally used in oxidation catalysts. If the catalytic metal platinum or palladium is added to the catalytic composition, it serves to catalyze the oxidation of gas-phase HC and CO pollutants as an added benefit. However, such catalytic metal is not needed to supplement the action of the ceria-zeolite or ceria-alumina-zeolite catalytic material in reducing total particulate emissions. Neither the platinum or palladium catalytic metal nor the metals or hydrogen used to dope the zeolite appear to significantly affect the rate of particulates conversion.

### The Zeolite

The zeolite doped with one or more catalytic metals and, optionally, hydrogen serves both to catalyze the oxidation of VOF and to crack the larger VOF molecules and, during periods of relatively low temperature operation, to trap gas-phase hydrocarbons within the zeolite pores. The trapped gas-phase hydrocarbons are brought into intimate contact with the catalytically active cations which facilitates oxidation of the hydrocarbons. In any case, the zeolite pores also serve to retain some of the gas-phase hydrocarbons during start-up or other periods when the catalyst is relatively cool and therefore less effective in catalyzing oxidation reactions, and to release the hydrocarbons only when the catalyst has been heated to higher temperatures. The higher temperatures impart sufficient energy to the trapped hydrocarbon molecules to enable them to escape the zeolite pores, but also enhance oxidation of the hydrocarbons in contact with the catalyst. The zeolite therefore serves not only as a catalyst for VOF oxidation, but as a hydrocarbon filter which traps hydrocarbons during periods of relatively low temperature and concomitant low catalytic activity and retains them until they can be efficiently oxidized by the catalyst during periods of relatively high temperature.

### The Carrier (Substrate)

The carrier used in this invention should be relatively inert with respect to the catalytic composition dispersed thereon. The preferred carriers are comprised of ceramic-like materials such as cordierite, α-alumina, silicon nitride, zirconia, mullite, spodumene, alumina-silica-magnesia or zirconium silicate, or of refractory metals such as stainless steel. The carriers are preferably of the type sometimes referred to as honeycomb or monolithic carriers, comprising a unitary body, usually cylindrical in configuration, having a plurality of fine, substantially parallel gas flow passages extending therethrough and connecting both end-faces of the carrier to provide a "flow-through" type of carrier. Such monolithic carriers may contain up to about) 108.5 (700) or more flow channels ("cells") per square centimeter (square inch) of cross section, although far fewer may be used. For example, the carrier may have from about 1 to 93 (7 to 600), more usually from about) 31 to 62 (200 to 400), cells per square centimeter ("cpsc") (square inch ("cpsi")).

While this discussion and the following examples relate to flow-through type carrier substrates, wall-flow carriers (filters) may also be used. Wall-flow carriers are generally similar in structure to flow-through carriers, with the distinction that each channel is blocked at one end of the carrier body, with alternate channels blocked at opposite end-faces. Wall-flow carrier substrates and the support coatings deposited thereon are necessarily porous, as the exhaust must pass through the walls of the carrier in order to exit the carrier structure.

### The Catalytic Material

The ceria-zeolite or ceria-alumina-zeolite catalytic material may be prepared in the form of an aqueous slurry of ceria, alumina (optional) and zeolite particles, the particles optionally being impregnated with the platinum or palladium catalytic metal component if one is to be dispersed on the catalytic material, and the zeolite is doped, e.g., may be ion-exchanged with selected cations. The slurry is then applied to the carrier, dried and calcined to form a catalytic material coating ("washcoat") thereon. Typically, the ceria, optional alumina and zeolite particles are mixed with water and an acidifier such as acetic acid, nitric acid or sulfuric acid, and ball milled to a desired particle size.
Dispersed Catalytic Metals: The optional platinum or palladium catalytic metal component is, when used, dispersed onto the ceria and zeolite particles or onto the ceria, alumina and zeolite particles. In such case, the ceria, zeolite and optional alumina act not only as catalysts in their own right but also as a support for the optional platinum or palladium catalytic metal component. (Such platinum or palladium dispersed onto the zeolite is not to be confused with the metals - which may be, among others, platinum and/or palladium - with which the zeolite is doped by ion-exchange or otherwise as discussed in more detail below).
The dispersal of the platinum and/or palladium onto the ceria, the optional alumina and the zeolite may be carried out after the ceria-zeolite or ceria-alumina-zeolite catalytic material is coated as a washcoat onto a suitable carrier, by impregnating the coated carrier with a solution of a suitable platinum and/or palladium compound, followed by drying and calcination. However, the ceria particles or both the ceria and alumina particles may be impregnated with a suitable platinum compound before the ceria or ceria-alumina material (plus the zeolite) is applied to the carrier. The latter technique reduces the amount of platinum and/or palladium dispersed onto the outer surface of the zeolite particles, thereby increasing the amount of catalytic material dispersed on the high surface ceria or ceria-alumina relative to the zeolite. In either case, the optional dispersed platinum or palladium metal may be added to the ceria-zeolite or ceria-alumina-zeolite catalytic material as, e.g., a solution of a soluble platinum compound, the solution serving to impregnate the ceria and optional alumina particles (or a coating thereof on the carrier) and the zeolite, if present at this point of the process. The impregnated components may then be dried and the platinum or palladium fixed thereon. Fixing may be carried out by calcination or by treatment with hydrogen sulfide or by other known means, to render the metal in water-insoluble form. Suitable platinum compounds for use in the foregoing process include potassium platinum chloride, ammonium platinum thiocyanate, amine-solubilized platinum hydroxide and chloroplatinic acid, as is well-known in the art. During calcination, or at least during the initial phase of use of the catalyst, such compounds, if present, are converted into the catalytically active elemental platinum metal or its oxide. Palladium nitrate or palladium analogs of the aforementioned platinum compounds may be used to provide palladium.
Doped Metals or Hydrogen: The zeolite used may be doped either by conventional acid treatment to convert the zeolite to the acid form or by conventional ion-exchange techniques to exchange catalytically active metal cations for cations of the zeolite, or by any other suitable technique which disposes the catalytic metal or metals or hydrogen within the pores of the zeolite. (Conventional acid treatment of a zeolite to convert it to an acid [hydrogen] form of the zeolite is, for economy of expression, referred to herein as doping the zeolite with hydrogen.) For doping the zeolite with metals, conventional ion-exchange techniques including repeated flushing with a solution of suitable metal compounds may be carried out. However, other doping techniques may be employed. For example, if the zeolite pores are flooded with a solution of, e.g., tetraammine platinum hydroxide or tetraammine platinum chloride, the platinum dissociates as a cation, and this positively charged platinum ionic species will adhere to negatively charged sites within the zeolite pores, even if the conventional ion-exchange technique of repeated exchanges of the solution with the zeolite is not carried out. Other techniques are not excluded, as long as the metals are dispersed throughout or within the zeolite pores. The conventional practice of indicating the catalytic moiety used to dope a zeolite by using it as a prefix for the zeolite is followed herein and in the claims. Thus, "H-Mordenite" indicates the hydrogen form of Mordenite, i.e., a hydrogen-doped Mordenite, "Fe-Beta" indicates an iron-doped Beta zeolite, "Fe-Pt-Beta" indicates an iron and platinum-doped Beta zeolite, etc.

### Preparing The Catalyst Composition

Generally, a slurry of ceria particles, activated alumina particles and zeolite particles will be deposited upon the carrier substrate and dried and calcined to adhere the catalytic material to the carrier and, when the dispersed platinum or palladium compound is present, to revert the platinum or palladium compound to the elemental metal or its oxide. The zeolite particles may have been doped with one or more metals, e.g., with a combination of platinum and/or base metals, or acid-treated to dope the zeolite with hydrogen, i.e., to provide an acid form of the zeolite.
When the catalytic material or any component is applied to a suitable honeycomb carrier, such as described above, the amount of the component is conventionally expressed herein and in the claims as weight of component per unit volume of catalyst, as this measure accommodates the presence of different sizes of catalyst composition voids provided by different carrier wall thicknesses, gas flow passage dimensions, etc. Grams per cubic centimeter ("g/cm³") (Grams per cubic inch ("g/in³")) units are used herein and in the claims to express the quantity of relatively plentiful components such as the ceria-alumina-zeolite catalytic material, and micrograms per cubic centimeter ("µg/cm²") (grams per cubic foot ("g/ft³")) units are used to express the quantity of the sparingly-used ingredients, such as the platinum metal. For typical diesel exhaust applications, the ceria-zeolite or ceria-alumina-zeolite catalytic material of the present invention generally may comprise from about 0.015 (0.25) to about 0.24 g/cm³ (4.0 g/in³), preferably from about 0.015 (0.25) to about 0.18g/cm³ (3.0 g/in³⁾ of the coated carrier substrate. The catalytic material may optionally also include from about 3.5 to 2118.8 (0.1 to 60), preferably from about 3.5 to 529.7 µg/cm³ (0.1 to 15 g/ft³) of dispersed platinum or from about 3.5 to 7062.9 (0.1 to 200), preferably from about 706.2 to 4237.7 µg/cm³ (20 to 120 g/ft³) of dispersed palladium. The zeolite may optionally be doped with from about 3.5 to 1765.7 µg/cm³ (0.1 to 50 g/ft³) of metal, e.g., from about 35.3 to 2118.8 µg/cm³ (1 to 60 g/ft³) of precious metal, and/or from about 3.5 to 7063 µg/cm³ (0.1 to 200 g/ft³) of base metal or the zeolite may be converted to its hydrogen form. The conversion to hydrogen form may be a 5 to 100 percent hydrogen exchange.
Without wishing to be bound by a particular theory, applicants offer the following hypothesis to explain the superior performance, when used to treat diesel engine exhaust, of the ceria-zeolite or ceria-alumina-zeolite catalytic materials according to this invention. It is believed that diesel exhaust contains a significant proportion of gases or vapors which are close to their dew point, i.e., close to condensing to a liquid, and thereby adding to the VOF portion of the particulates at the conditions obtaining in the exhaust pipe. These "potential particulates" condense in the ceria-zeolite or ceria-alumina-zeolite catalytic materials, their condensation being enhanced by a capillary condensation effect, a known phenomenon in which a capillary-like action facilitates condensation of oil vapors to liquid phase. The small pore size of the high surface area ceria or ceria and alumina components of the catalytic material is believed to provide such capillary condensation action for the VOF. Generally, the higher the surface area of the ceria and optional alumina, the smaller is the pore size. As the exhaust temperature increases during increased work loads imposed on the diesel engine, the condensed hydrocarbon liquids (condensed VOF) are desorbed from the ceria or ceria-alumina components of the catalytic material and volatilize, at which time the catalytic effect of the ceria or the ceria-alumina components of the catalytic material, which provide numerous active sites, and the cracking effect attained by contact of the VOF with the surface of the zeolite, enhances gas-phase oxidation, i.e., combustion, and cracking of the desorbed, re-volatilized hydrocarbon (VOF) vapors. Even if a proportion of the vapors re-volatilized from the condensate is not combusted, the cracking of heavy VOF components to lighter hydrocarbons on the outer surface of the zeolite reduces the total amount of condensibles, so that the total particulates output from the diesel engine is concomitantly further reduced. In this latter regard, the ceria or ceria-alumina component of the catalytic material is believed to act as a trap and a storage medium for condensed or condensible VOF during relatively cool phases of the exhaust, and volatilizes the VOF and cracks it during relatively hot phases. The zeolite serves, during relatively cool phases of the exhaust, to trap gas-phase hydrocarbon components and retain them until temperatures high enough for the platinum or other metal to oxidize at least some of the gas-phase HC are attained. The porous nature of the ceria-zeolite or ceria-alumina-zeolite catalytic material is also believed to promote rapid diffusion of the VOF throughout the washcoat structure, thereby facilitating relatively low temperature gasification and oxidation of the VOF upon increases in temperature of the catalyst during higher engine load (increased exhaust gas temperature) cycles. The presence of sulfates does not significantly adversely affect the capacity of the ceria-zeolite or ceria-alumina-zeolite catalytic material to reduce particulate emissions.
Generally, other ingredients may be added to the catalyst composition of the present invention such as conventional thermal stabilizers for the alumina, e.g., rare earth metal oxides such as ceria. Thermal stabilization of high surface area ceria and alumina to militate against phase conversion of these oxides to less catalytically effective low surface area forms is well-known in the art, although thermal stabilization of alumina is not usually needed for diesel exhaust service wherein exhaust temperatures are typically lower than for gasoline-fueled engines. Such thermal stabilizers may be incorporated into the bulk ceria or into the optional bulk activated alumina, by impregnating the ceria (or alumina) particles with, e.g., a solution of a soluble compound of the stabilizer metal, for example, an aluminum nitrate solution in the case of stabilizing bulk ceria. Such impregnation is then followed by drying and calcining the impregnated ceria particles to convert the aluminum nitrate impregnated therein into alumina, to thermally stabilize the ceria. A suitable technique is shown in U.S. Patent 4,714,694 to C.Z. Wan et al, in which ceria particles are impregnated with a liquid dispersion of an aluminum compound, e.g., an aqueous solution of a soluble aluminum compound such as aluminum nitrate, aluminum chloride, aluminum oxychloride, alumnium acetate, etc. After drying and calcining the impregnated ceria in air at a temperature of, e.g., from about 300°C to 600°C for a period of 1/2 to 2 hours, the aluminum compound impregnated into the ceria particles is converted into an effective thermal stabilizer for the ceria, to provide an "alumina-stabilized ceria".
In addition, the catalyst compositions of the invention may contain other catalytic ingredients such as other base metal promoters or the like. However, in one embodiment, the catalyst composition of the present invention consists essentially only of the high surface area ceria and the zeolite, and, optionally, the high surface area alumina, preferably present in the weight proportions given above, with or without thermal stabilizers impregnated into the alumina and ceria and, optionally, including palladium or limited amounts of platinum dispersed thereon, and optionally, employing a doped zeolite as described above.
Examples A and B show typical methods of preparing metal-doped zeolites which are useable as components of the catalytic material of the present invention.

### Example A

### Preparation of Fe-Beta Zeolite

To prepare a sample of iron-exchanged Beta zeolite (Fe-Beta zeolite), 17 grams of iron [II] sulfate was dissolved in 800 ml water. One hundred grams of Beta zeolite was added to the solution which was then stirred for 1 hour at a temperature of 70°C to 80°C. The resulting slurry was then filtered and washed with 2 liters of water, dried at 120°C and calcined at 540°C. The resulting material comprised 1.65% by weight iron. This technique was employed to prepare the Fe-Beta zeolite catalysts used in the following Examples.

### Example B

### Preparation of Pt-Fe-Beta Zeolite

A solution was prepared using 0.54 grams of tetraammine platinum chloride in 500 ml water, to which 100 grams of Beta zeolite was added. The mixture was stirred for 24 hours at room temperature so that platinum ions replaced sodium ions in the zeolite material. The slurry was then filtered and washed with 2 liters water, dried and calcined at 540°C. The resulting calcined, platinum ion-exchanged Beta zeolite was then ion-exchanged with iron [II] sulfate by adding the zeolite to a solution of iron [II] sulfate equivalent to 17 grams of iron [II] sulfate in 800 ml water. The solution was allowed to stand for about 1 hour and was then stirred at 70°C to 80°C for 1 hour. The resulting slurry was then filtered, washed with water, dried at 120°C and calcined at 540°C. On a dry basis, the Beta zeolite comprised 1.6% by weight iron and 0.25% by weight platinum. This technique was employed to prepare the Fe-Pt-Beta zeolite catalyst components used in the following Examples.

### Example 1

A. A catalyst according to the present invention was prepared by coating a honeycomb monolith with a catalytic material comprised of a zeolite, bulk ceria and bulk alumina to provide 0.051 g/cm³ (0.84 g/in³) γ-alumina, 0.050 g/cm³ (0.83 g/in³) alumina-stabilized ceria and 0.050 g/cm³ (0.83 g/in³) Fe-Beta zeolite. The honeycomb monolith was a cordierite substrate measuring 22.86 cm (9 inches) in diameter by 6 inches long and having 62 cpsc (400 cpsi). The catalyst material also provided 88.2 µg/cm³ (2.5 g/ft³) of platinum, 80 percent by weight of which was dispersed on the alumina, and 20 percent by weight of which was dispersed on the ceria. This catalyst was designated E-1.

B. For comparison, three other catalysts were prepared to provide a series of three otherwise identical compositions containing a ceria-alumina catalytic material but no zeolite and, in two cases, having platinum dispersed thereon. The platinum loadings of these comparative catalysts were 0.0, 17.6 (0.5) and 70.6 µg/cm³ (2.0 g/ft³) platinum. Each comparative catalyst comprised a γ-alumina undercoat at a loading of 0.061 g/cm³ (1.0 g/in³) upon which was coated a top coat layer comprised of 0.064 g/cm³ (1.05 g/in³) γ-alumina plus 0.055 g/cm³ (0.90 g/in³) alumina-stabilized ceria. The alumina-stabilized ceria contained 2.5 weight percent Al₂O₃ based on the combined weight of bulk ceria and stabilizing alumina dispersed therein. The catalysts were coated onto a 22.86 cm (9 inches) diameter by 15.24 cm (6 inches) long, 62 cpsc (400 cpsi) cordierite substrate. As used herein, "cpsc" ("cpsi") is an abbreviation for cells per square centimeter (inch), denoting the number of gas flow passages per square inch of face area of the substrate. The resulting catalyst samples were designated as C-1 (0.0 µg/cm³ (g/ft³) platinum, aged 24 hours as described below), C-2 (17.6 µg/cm³ (0.5 g/ft³) platinum, aged 25 hours) and C-3 (70.6 µg/cm³ (2.0 g/ft³) platinum, aged 24 hours).

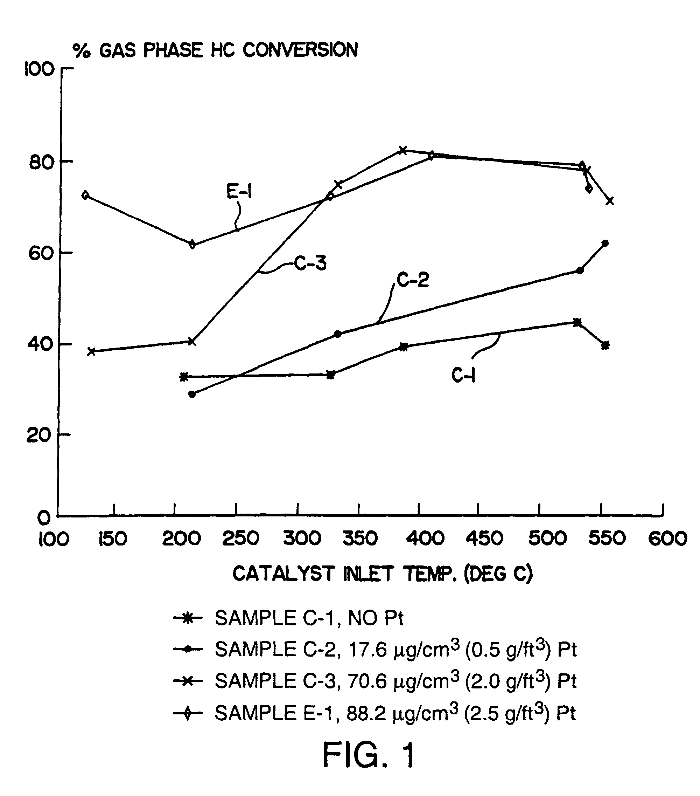

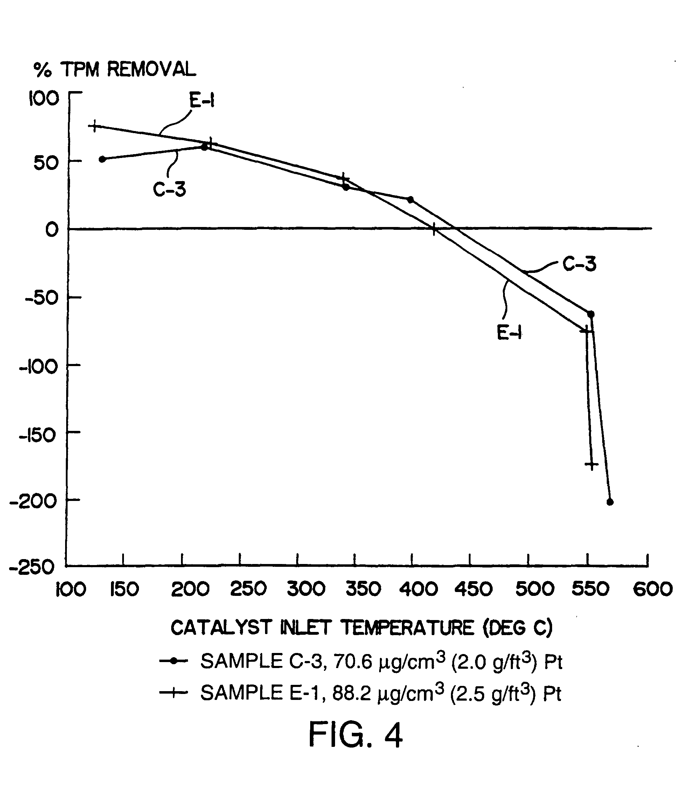

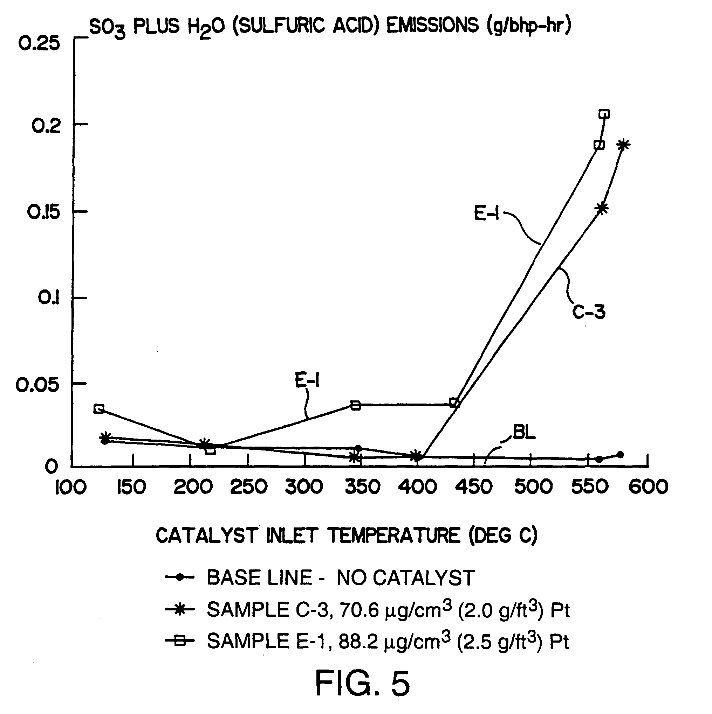

C. The four catalyst samples were conditioned prior to evaluation using an aging cycle involving 20 minutes each at Modes 2,6 and 8 of the European Thirteen Mode Cycle Test Procedure (ECE R.49 Thirteen Mode Cycle). This Test Procedure is set forth in the Society of Automotive Engineers Publication, SAE Paper #880715, published at the International Congress and Exposition, Detroit, Michigan, February 29 through March 4, 1988, by Georgio M. Cornetti et al. Prior to testing to develop the data of TABLE I-B and Figures 1-5, the three catalyst samples were aged 24 or 25 hours as indicated above on a Cummins 6BT turbocharged diesel engine having a 5.9 liter displacement and rated at 230 horsepower. For both aging and test purposes, the engine was run with low sulfur fuel (0.05 weight percent sulfur) under steady state conditions using test modes selected from the aforesaid European Thirteen Mode Cycle Test Procedure.
The engine conditions for the test modes along with average (for five runs) catalyst inlet temperatures and baseline emissions (of untreated engine exhaust) are shown in TABLE I-A.

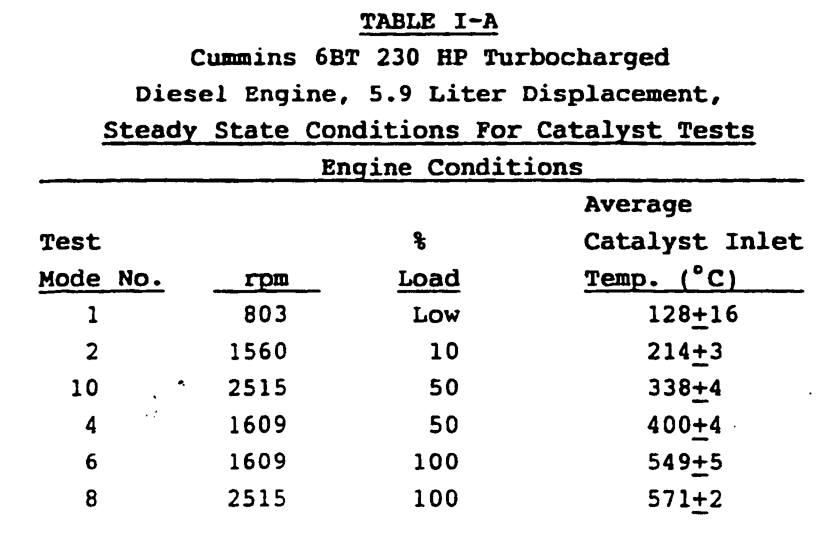

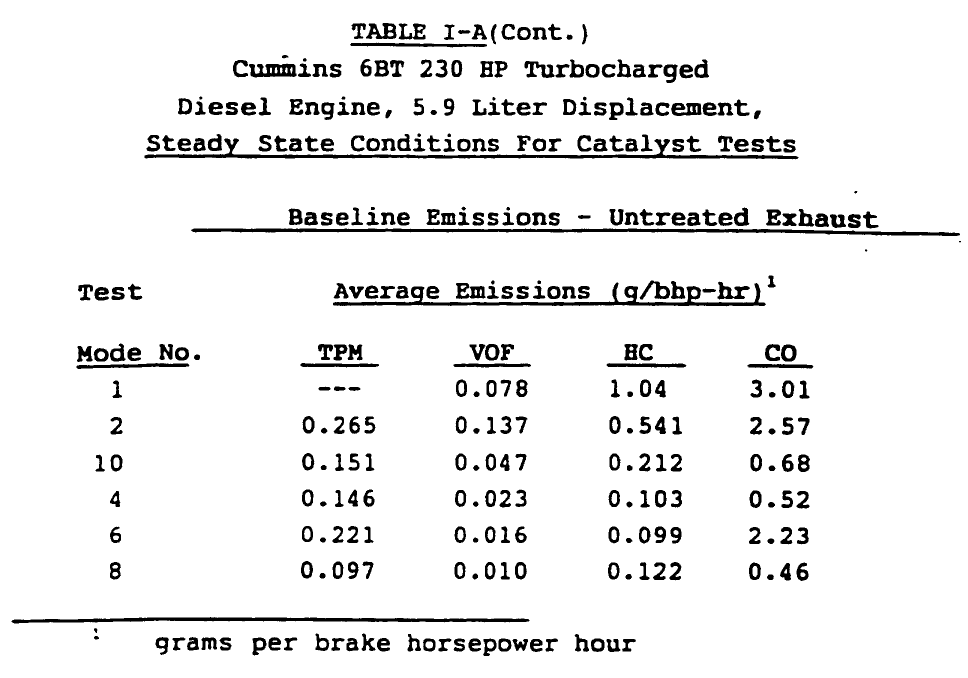

The conversion activities of each of these catalysts was evaluated in selected steady state modes of an ECE R.49 Thirteen Mode Cycle Test Procedure using a 1991 Cummins 6BT (6 liter DI/TC) engine after approximately 24 hours aging, as described above. The exhaust inlet temperature and the conversion rate for the conversion of VOF, TPM (total particulates), hydrocarbons and carbon monoxide were measured for various modes of the test, and are set forth in the following TABLE I-B.

**TABLE I-B**

| **ECE Thirteen Mode Cycle Test** | | | | | | | |
|---|---|---|---|---|---|---|---|
| **DOC Sample** | **Pt Load. (µg/cm**^{**3**}**) (g/ft**^{**3**}**)** | **Mode #** | **Cat. Inlet Temp. (C° )** | **% Removal** | | | |
| | | | | **VOF** | **TPM** | **HC** | **CO** |
| C-1 | 0.0 | 2 | 209 | 72 | 63 | 31 | 1 |
| | | 10 | 335 | 60 | 27 | 32 | 7 |
| | | 4 | 399 | 62 | 18 | 38 | 18 |
| | | 6 | 547 | 84 | -40 | 44 | 27 |
| | | 8 | 572 | 79 | -181 | 39 | -4 |
| C-2 | 17.6 (0.5) | 2 | 215 | 60 | 45 | 27 | 6 |
| | | 10 | 343 | 58 | 28 | 41 | 63 |
| | | 6 | 549 | 91 | -64 | 56 | 85 |
| | | 8 | 570 | 80 | -201 | 62 | 45 |
| C-3 | 70.6 (2.0) | 1 | 127 | 56 | 52 | 37 | -1 |
| | | 2 | 215 | 61 | 61 | 39 | 8 |
| | | 10 | 341 | 53 | 31 | 74 | 86 |
| | | 4 | 397 | 61 | 22 | 82 | 87 |
| | | 6 | 554 | 89 | -60 | 78 | 95 |
| | | 8 | 572 | 79 | -200 | 71 | 70 |
| E-1 | 88.2 (2.5) | 1 | 121 | 55 | 75 | 72 | 3 |
| | | 2 | 217 | 83 | 63 | 61 | 6 |
| | | 10 | 338 | 66 | 37 | 72 | 86 |
| | | 4 | 425 | 61 | -1 | 81 | 87 |
| | | 6 | 552 | 90 | -72 | 79 | 95 |
| | | 8 | 557 | 70 | -172 | 74 | 77 |

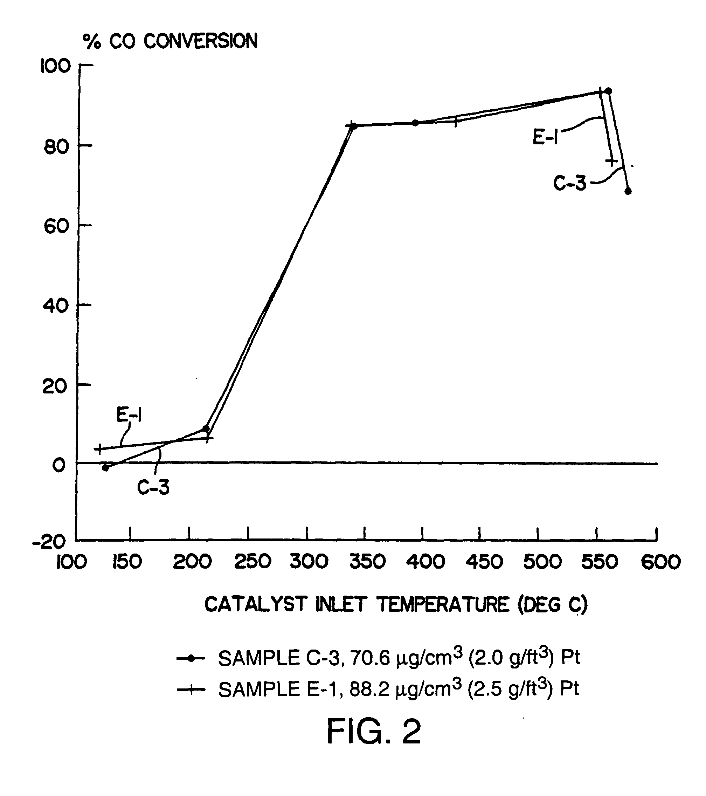

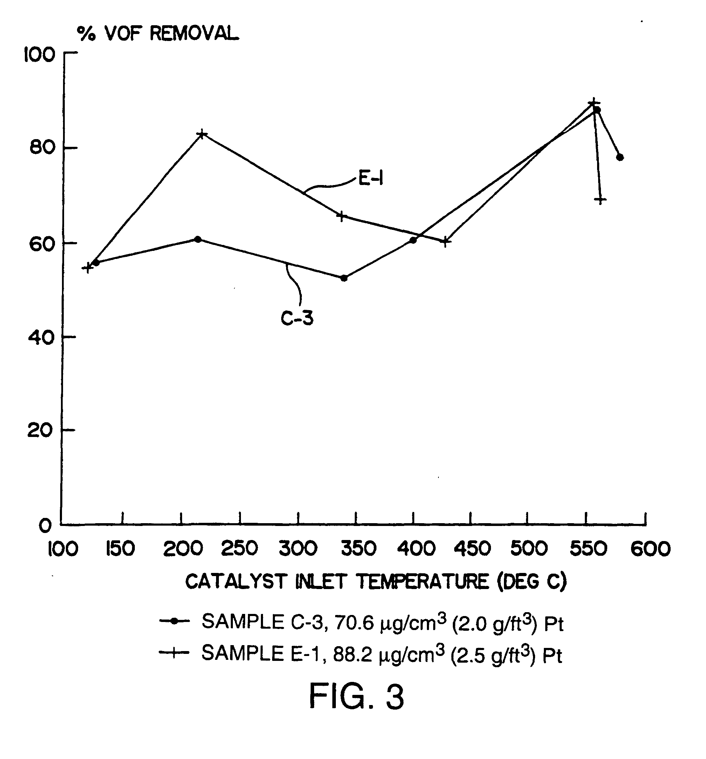

The data of TABLE I-B are shown graphically in Figures 1-5 and show that the catalyst embodying to the present invention (E-1) exhibited high levels of gas-phase hydrocarbon removal in the lowest temperature modes (modes 1 and 2) of the test (72% and 61%) compared to the comparative samples under the same conditions (e.g., 37% and 39% for catalyst C-3). At higher temperatures, e.g., 340° and above, gas-phase hydrocarbon conversion rates of sample E-1 were comparable to sample C-3 but still markedly superior to samples C-1 and C-2. The superior gas-phase hydrocarbon conversion performance of sample E-1, especially at low temperature regimes, is attributed to the Fe-Beta zeolite. Carbon monoxide conversion was essentially the same for sample E-1 and the comparative sample C-3, as will be readily appreciated from Figure 2, indicating that the addition of the iron-Beta zeolite did not appear to have an effect on carbon monoxide conversion efficiency. The overall VOF removal performance of sample E-1 was slightly better than any of the comparative samples. Figure 3 graphically illustrates VOF conversion efficiency of catalyst E-1 and comparative sample C-3.

### Example 2

### Catalyst Comprising Fe-Beta Zeolite and Platinum on Alumina and Ceria

A.(1) A catalyst component comprising platinum dispersed on Fe-Beta zeolite and on ceria was prepared as follows. Two hundred grams of Fe-Beta zeolite containing 1.65% by weight iron was made into a water-based slurry and milled for 3 hours. The pH was adjusted to 4.5 by the addition of monoethanolamine. An amine-solubilized platinum hydroxide solution was added to the slurry, followed by acetic acid to precipitate the platinum, which constituted 0.029% by weight. The slurry was further milled to reduce the particle size so that 90 percent of the particles have a diameter of 12 microns or less.

(2) Separately, a similar platinum salt solution was slowly added to 650 grams of ceria having a BET surface area of 143 m²/g that had previously been impregnated with 2.5% by weight alumina stabilizer (basis, weight of ceria plus alumina stabilizer) by a conventional technique of impregnating the ceria with a solution of an alumina precursor and drying and calcining the impregnated ceria. Sufficient platinum salt solution was added to deposit 0.029% platinum onto the ceria, by weight of ceria plus platinum. The platinum was fixed onto the ceria by adding 5 cc of acetic acid per 100 grams of solids to the Pt/ceria mixture. The Pt/ceria mixture was milled in water so that 90% of the particles have a diameter of 12 microns or less to produce a slurry having 47.8% solids.

(3) Portions of the two slurries of parts (1) and (2) were mechanically mixed to produce a slurry comprising about 50% ceria, 50% Fe-Beta zeolite and 0.029% platinum, all by weight (dry basis). A portion of the mixed slurry was dried overnight at 100°C in air and then calcined in air at 450°C for 1 hour. A portion of the dried, calcined powder was made into a slurry and coated onto a cordierite honeycomb 3.81 cm (1.5 inches) in diameter, 7.62 cm (3 inches) long and having 62 cpsc (400 cpsi), at a loading of 0.061 g/cm³ (1.0 g/in³). This washcoat loading yielded 17.6 µg/cm³ (0.5 g/ft³) of platinum. The coated monolith was dried and calcined and designated E-2.

B.(1) A catalyst was prepared from a slurry comprising three types of particles, platinum-bearing ceria particles, platinum-bearing alumina particles and Fe-Beta zeolite particles, i.e., Beta zeolite ion-exchanged with iron. These particles were prepared as separate slurries before being mixed together.

(2) The slurry of platinum-bearing ceria particles was prepared by impregnating ceria particles having a BET surface area of 143 m²/g with a platinum salt solution as described above in part A(1) to obtain a platinum metal loading of 0.035% upon calcination. The resulting particles were milled to an average particle size of less than 12 microns.

(3) The slurry of platinum-bearing alumina particles was prepared by impregnating alumina having a BET surface area of 150 m²/g with a platinum salt solution to yield 0.138% by weight platinum metal upon calcination. The particles were milled to an average particle size less than 12 microns.

(4) A slurry of Fe-Beta zeolite particles was prepared by milling the particles to an average particle size of less than 12 microns.

(5) The foregoing three slurries were mechanically mixed to form a composite slurry yielding 33.18% ceria, 33.18% Fe-Beta zeolite, 33.58% alumina and 0.058% platinum by weight (dry basis). The composite slurry was coated onto an oval-shaped honeycomb monolith having cross section dimensions of 8.08 x 16.97 cm (3.18 X 6.68 inches), a length of 8.00 cm (3.15 inches) and 62 cpsc (400 cpsi), at a total loading of 0.153 g/cm³ (2.5 g/in³), consisting of 0.051 g/cm³ (0.84 g/in³) alumina, 0.050 g/cm³ (0.83 g/in³) ceria, 0.50 g/cm³ (0.83 g/in³) Fe-Beta zeolite and 0.0000854 g/cm³ (0.0014 g/in³) (equivalent to 84.7 µg/cm³ 2.4 g/ft³) platinum. The catalyst-coated honeycomb carrier was dried in air at 100°C and then calcined at 450°C for 2 hours. A sample core 7.62 cm (3 inches) long and 3.81 cm (1.5 inches) in diameter was drilled from the calcined honeycomb and designated E-3.

(6) Fe-Beta zeolite having 1.65 weight percent iron was made into an aqueous slurry and milled so that about 90 percent of the particles had a diameter of 12 microns or less. The slurry was then coated onto a carrier monolith 3.81 cm (1.5 inches) in diameter and 7.62 cm (3.0 inches) in length having 62 cpsc (400 cpsi). The coated carrier was calcined at 450°C in air for 1 hour and had a washcoat loading of 0.061 g/cm³ (1.0g/in³) (dry basis). This sample was designated C-4.

C. The catalysts designated E-2, E-3 and C-4 were tested in a laboratory diagnostic reactor for comparison. The inlet stream of the diagnostic reactor comprised 200 ppm heptane measured as C₁, 4.5% CO₂, 50 ppm SO₂, 1000 ppm NO, 200 ppm CO, 10% O₂, 10% H₂O, balance N₂. The inlet temperatures of the test gas stream to the catalyst were 275, 350, 425 and 500°C.
The results of the diagnostic laboratory reactor tests as set forth in Figures 6-9 show that the catalysts of the present invention, E-2 and E-3, exhibited substantially better gas phase HC activity at a space velocity ("sv") of 50,000/hr and better HC activity at sv=90,000/hr than did the catalyst containing only Fe-Beta zeolite (C-4). Furthermore, E-2 gave better results than E-3 despite having a lower Pt loading (17.6 vs. 88.2 µg/cm³ ((0.5 vs. 2.5 g/ft³)). It is also clear that the catalysts of the present invention gave much better CO conversion activity than did the catalyst containing only Fe-Beta zeolite, the latter exhibiting net negative CO conversion due to partial oxidation of HC to form CO in an amount to give a higher concentration in catalyst outlet stream than in the inlet stream. Finally, the catalysts of the present invention exhibit very low SO₂ oxidation levels due to the low Pt loading, indicating control of sulfate-make by the catalyst which would otherwise contribute to particulate emissions. As used herein and throughout this application space velocity ("sv") has the usual meaning of the volumes of the exhaust stream or test gas, measured at standard conditions of temperature and pressure, passing through the volume of the catalyst composition (the dimensional volume of the coated honeycomb monolith) per hour.

### Example 3

### Catalyst Comprising Pt/CeO₂, Pt/Al₂O₃ and Fe-Beta Zeolite

A. A catalyst according to the present invention was prepared by coating two differently configured honeycomb carriers with identical loadings of the same catalytic material. One honeycomb carrier to be tested on an Audi 100 automobile as described below measured 14.38 cm (5.66 inches) in diameter by 15.24 cm 6 inches long and had 62 cpsc (400 cpsi) and was designated an "A-type carrier". A second honeycomb carrier to be tested on a Mercedes Benz 200D automobile as described below was of oval configuration and measured 7.70 cm (3.03 inches) by 14.68 cm (5.78 inches) (minor and major axes of the oval face) by 15.24 cm (6 inches long and had 31 cpsc (200 cpsi). This carrier was designated an "M-type carrier". Both the A-type carrier and the M-type carrier were coated with 0.152 g/cm³ (2.5 g/in³) of a washcoat comprising 33% by weight alumina-stabilized ceria and 34% by weight γ-alumina with platinum dispersed on both the ceria and the alumina as described above in Example 2. The washcoat further comprised 33% by weight Fe-Beta zeolite having 1.65% iron by weight. The washcoat yielded a platinum loading of 88.2 µg/cm³ (2.5 g/ft³) platinum distributed equally on the ceria and alumina; there was no platinum on the Fe-Beta zeolite. These catalysts were each designated E-4.

B. A second pair of catalysts according to the present invention was prepared as described in part A above, i.e., one was prepared using an A-type carrier and one using an M-type carrier, except that the platinum loading was 353.1 µg/cm³ (10 g/ft³) dispersed equally on the ceria and alumina, with no platinum on the Fe-Beta zeolite. These catalysts were each designated E-5.

C.(1) A comparative catalyst was prepared by coating an M-type carrier with 0.152 g/cm³ (2.5 g/in³) of a catalyst washcoat consisting of 46% by weight alumina-stabilized ceria having a BET surface area of 143 m²/g and 54% by weight γ-alumina having a BET surface area of 150 m²/g. The catalyst was prepared by separately impregnating bulk alumina and bulk ceria with an amine-solubilized platinum hydroxide solution, precipitating the platinum with acetic acid and milling the particles to a size of 90 percent of the particles having a diameter of 12 microns or less. The two slurries were then blended to provide a 50% solids slurry which was used to coat the honeycomb carrier. The washcoat yielded a platinum loading of 70.6 µg/cm³ (2.0 g/ft³) equally dispersed on the ceria and alumina. This catalyst was designated comparative sample C-X.

(2) Catalyst pairs respectively designated C-5 and C-6 were prepared as described for catalyst C-X, i.e., two C-5 samples, one on each of an A-type carrier and an M-type carrier and two C-6 samples, one on each of an A-type and an M-type carrier, except that the platinum loadings were 176.5 µg/cm³ (5.0 g/ft³) on the C-5 samples and 353.1 µg/cm³ (10 g/ft³) on the C-6 samples.

(3) A commercial catalyst material comprised a washcoat of 85-90% by weight alumina, 5-7% by weight vanadium oxide (V₂O₅) and 1-2% by weight platinum coated onto a honeycomb carrier measuring 14.38 cm (5.66 inches) in diameter by 15.24 cm (6 inches) long and having 62 cpsc (400 cpsi). The catalyst had 2119 µg/cm³ (60 g/ft³) of catalytic material. This catalyst was designated C-7.

D. The catalysts of parts A, B and C were tested for hydrocarbon conversion, CO activity and SO₂ conversion using the exhaust from an Audi 100 automobile having a 5 cylinder, 2.5 liter, direct injected/turbocharged engine with intercooling and exhaust gas recycle and a Mercedes Benz 200D automobile having a 4 cylinder, 2.0 liter, indirect injected/naturally aspirated engine.
The tests were conducted using a chassis dynamometer and emissions measurement instrumentation and techniques for total gas-phase hydrocarbons (HC), carbon monoxide (CO, nitrogen oxides NOₓ) and total particulates (TPM).
The emissions evaluation test used was the European transient test known as Cycle "A". This test consists of two parts. The first, the ECE part, is characterized by lower loads and cooler exhaust temperatures than the second part, the EUDC (Extra Urban Driving Cycle). Emissions are measured for each of these parts of the test and the results are weighed and combined to give emissions for the overall Cycle "A" test. Emissions are expressed in grams/kilometer (g/km).
The results of the Cycle A tests are set forth in TABLE II-A and TABLE II-B.

**TABLE II-A**

| **Test Results for Audi 100 Diesel Automobile** | | | | | | | | |
|---|---|---|---|---|---|---|---|---|
| | | | **Hydrocarbons** | | **Carbon Monoxide** | | **Particulates** | |
| **Test Part** | **Catalyst** | **Pt Load.** **µg/cm**^{**3**} **(g/ft**^{**3**}**)** | **g/km**^{**1**} | **/ %**^{**2**} | **g/km**^{**1**} | **/ %**^{**2**} | **g/km**^{**1**} | **/ %**^{**2**} |
| ECE | None | | 0.95 | --- | 3.05 | --- | 0.236 | --- |
| | C-5 | 176.5 (5.0) | 0.71 | 25 | 3.05 | 0 | 0.088 | 62.7 |
| | C-6 | 353 (10.0) | 0.67 | 29 | 3.05 | 0 | 0.069 | 70.8 |
| | E-4 | 88.2 (2.5) | 0.18 | 81 | 3.05 | 0 | 0.083 | 64.8 |
| | E-5 | 353 (10.0) | 0.19 | 80 | 3.05 | 0 | 0.068 | 71.2 |
| | C-7 | 14125 (40.0)+ | 0.46 | 52 | 2.59 | 15.1 | 0.082 | 65.3 |
| EUDC | None | | 0.13 | --- | 0.44 | --- | 0.114 | --- |
| | C-5 | 176.5 (5.0) | 0.09 | 30.8 | 0.30 | 32 | 0.065 | 43 |
| | C-6 | 353 (10.0) | 0.09 | 30.8 | 0.30 | 32 | 0.048 | 57.9 |
| | E-4 | 88.2 (2.5) | 0.104 | 20.0 | 0.41 | 7 | 0.06 | 47.4 |
| | E-5 | 353 (10.0) | 0.061 | 53.1 | 0.16 | 64 | 0.05 | 56.1 |
| | C-7 | 1412.5 (40.0)+ | 0.017 | 86.9 | 0.02 | 95 | 0.088 | 22.8 |

| CYCLE | | | | | | | | |
|---|---|---|---|---|---|---|---|---|
| "A" | None | | 0.428 | --- | 1.4 | --- | 0.148 | --- |
| | C-5 | 176.5 (5.0) | 0.320 | 25.2 | 1.3 | 7.1 | 0.073 | 50.7 |
| | C-6 | 353 (10.0) | 0.300 | 29.9 | 1.3 | 7.1 | 0.056 | 62.2 |
| | E-4 | 88.2 (2.5) | 0.132 | 69.2 | 1.37 | 2.1 | 0.068 | 54.1 |
| | E-5 | 353 (10.0) | 0.107 | 75.0 | 1.21 | 13.6 | 0.057 | 61.5 |
| | C-7 | 1412.5 (40.0)+ | 0.178 | 58.4 | 0.96 | 31.4 | 0.085 | 42.6 |

| | | | | | | | | |
|---|---|---|---|---|---|---|---|---|
| ¹ Emissions in exhaust. | | | | | | | | |
| ² Percent of emissions converted to innocuous substances by catalytic treatment. | | | | | | | | |

**TABLE II-B**

| **Test Results for Mercedes Benz 200D Diesel Automobile** | | | | | | | | |
|---|---|---|---|---|---|---|---|---|
| | | | **Hydrocarbons** | | **Carbon Monoxide** | | **Particulates** | |
| **Test Part** | **Catalyst** | **Pt Load.** **µg/cm**^{**3**} **(g/ft**^{**3**}**)** | **g/km**^{**1**} | **/ %**^{**2**} | **g/km**^{**1**} | **/ %**^{**2**} | **g/km**^{**1**} | **/ %**^{**2**} |
| ECE | None | | 0.07 | --- | 0.9 | --- | 0.125 | -- |
| | C-X | 70.6 (2.0) | 0.07 | 0 | 0.88 | 2.2 | 0.09 | 28 |
| | C-5 | 176.5 (5.0) | 0.07 | 0 | 0.86 | 4.4 | 0.09 | 28 |
| | C-6 | 353 (10.0) | 0.065 | 7.1 | 0.75 | 17 | 0.09 | 28 |
| | E-4 | 88.2 (2.5) | 0.008 | 89 | 0.9 | 0 | 0.095 | 24 |
| | E-5 | 353 (10.0) | 0.006 | 91 | 0.8 | 11 | 0.095 | 24 |
| EUDC | None | | 0.031 | --- | 0.31 | --- | 0.097 | -- |
| | C-X | 70.6 (2.0) | 0.02 | 35 | 0.17 | 45 | 0.071 | 27 |
| | C-5 | 176.5 (5.0) | 0.006 | 81 | 0.1 | 68 | 0.06 | 38 |
| | C-6 | 353 (10.0) | 0.006 | 81 | 0.08 | 74 | 0.064 | 34 |
| | E-4 | 88.2 (2.5) | 0.017 | 45 | 0.21 | 32 | 0.064 | 34 |
| | E-5 | 353 (10.0) | 0.004 | 87 | 0.1 | 68 | 0.07 | 28 |

| CYCLE | | | | | | | | |
|---|---|---|---|---|---|---|---|---|
| "A" | None | | 0.045 | --- | 0.52 | --- | 0.107 | -- |
| | C-X | 70.6 (2.0) | 0.038 | 16 | 0.43 | 17 | 0.078 | 27 |
| | C-5 | 176.5 (5.0) | 0.029 | 36 | 0.33 | 37 | 0.071 | 34 |
| | C-6 | 353 (10.0) | 0.027 | 40 | 0.32 | 38 | 0.073 | 32 |
| | E-4 | 88.2 (2.5) | 0.014 | 69 | 0.46 | 12 | 0.075 | 30 |
| | E-5 | 353 (10.0) | 0.005 | 89 | 0.35 | 33 | 0.078 | 27 |

| | | | | | | | | |
|---|---|---|---|---|---|---|---|---|
| ¹ Emissions in exhaust. | | | | | | | | |
| ² Percent of emissions converted to innocuous substances by catalytic treatment. | | | | | | | | |

From the data in the foregoing TABLES II-A and II-B it can be seen that samples E-4 and E-5 according to the present invention gave higher gas-phase hydrocarbon conversion (about 80%) in the ECE part of the test for the Audi 100 automobile than comparative catalysts C-5, C-6 having comparable platinum loadings but without Fe-Beta zeolite, and without significant gain in SO₂ oxidation. Further, catalysts E-4 and E-5 according to the present invention gave better hydrocarbon conversion performance than the commercial catalyst C-7, which has a much higher platinum loading.
In the hotter EUDC part of the test, on the Audi 100 automobile, catalyst samples of the present invention (E-4, E-5) exhibited superior particulates removal compared to the comparative commercial catalyst C-7, as did the comparative catalysts C-5 and C-6. This is probably due to the high degree of SO₂ oxidation caused by the high platinum loading of the commercial catalyst, the resulting sulfate make adding to the mass of the particulates. Overall, the catalysts according to the present invention (E-4, E-5) gave better gas-phase hydrocarbon conversion and particulates removal than the comparative commercial catalyst (C-7) and the comparative catalysts (C-5, C-6).
The overall performance of the catalysts for Cycle A was slightly better than the comparative samples.
The results for the ECE portion of the tests on the Mercedes Benz automobile also show that catalysts according to the invention (E-4, E-5) had superior low temperature gas-phase hydrocarbon conversion while maintaining acceptable particulates conversion. It is noted that all the catalysts except E-4 exhibited significant improvement in CO conversion, in comparison to the Audi 100 test. The improvement is attributed to the difference in exhaust temperature between the respective vehicles (on average 10°C higher for Mercedes than for Audi), highlighting the temperature sensitivity of CO conversion activity. The overall Cycle A results for the catalysts of the invention are substantially better than the comparative samples due to the better overall hydrocarbon conversion with comparable CO and particulates conversion. The better total particulates conversion rates exhibited for the Audi automobile relative to the Mercedes automobile can be attributed to the lower VOF content of the Mercedes exhaust as compared to the Audi exhaust.

### Example 4

### Examples of Ceria-Alumina With Pt-Beta Zeolite and Pt-Fe-Beta Zeolite

A. Platinum ion-exchanged Beta zeolite was prepared by stirring 100 grams of Beta zeolite powder into a water solution containing 0.85 grams tetraammine platinum [II] chloride in 500 ml water. The resulting slurry was stirred and allowed to stand for 24 hours, and then filtered, washed with 1 liter of water, dried overnight at 100°C and calcined at 540°C for 2 hours. The resulting Pt-Beta zeolite material contained 0.48% platinum by weight.
A catalyst slurry was prepared comprising 33% by weight (dry basis) of the Pt-Beta zeolite and 67% (dry basis) of a mixture of equal parts by weight of ceria having a surface area of 143 m²/g and γ-alumina having a surface area of 150 m²/g. The slurry was coated onto a honeycomb carrier to provide a loading of 0.122 g/cm³ (2 g/in³) using 10% by weight additional γ-alumina as a binder. The coated honeycomb was exposed to a gaseous mixture of 10% steam in air at 400°C for 4 hours. This catalyst contained 353 µg/cm³ (10g/ft³) Pt and was designated E-6.
B. Beta zeolite was ion-exchanged with iron and then with platinum as generally described in Example B to yield a Beta zeolite comprising 1.65% by weight iron and 0.5% by weight platinum. The resulting Pt-Fe-Beta zeolite material was made into a slurry comprising 33% by weight (dry basis) Pt-Fe-Beta zeolite and 67% (dry basis) of a mixture of equal parts by weight of ceria having a surface area of 143 m²/g and γ-alumina having a surface area of 150 m²/g. The slurry was coated onto a honeycomb carrier at a loading of 0.122 g/cm³ (2 g/in³) using additional alumina as a binder. This catalyst contained 353 µg/cm³ (10 g/ft³) Pt and was designated E-7.
C. Catalysts E-6 and E-7 were tested in a diagnostic reactor through which a test stream identical to that described in part C. of Example 2 was passed. The heptane, carbon monoxide and SO₂ conversion rates were noted at the inlet temperatures of the test stream set forth below in TABLE III, in which the results are tabulated.

**TABLE III**

| **Conversion** | | | | | | | | | | | | |
|---|---|---|---|---|---|---|---|---|---|---|---|---|
| | **% Heptane at °C** | | | | **% CO at °C** | | | | **% SO**_{**2**} **at °C** | | | |
| **Cat.** | **150** | **200** | **275** | **350** | **150** | **200** | **275** | **350** | **150** | **200** | **275** | **350** |
| E-6 | 3.3 | 3.5 | 13 | 93 | 1.5 | 7 | 97 | 100 | 2.6 | 0 | 25 | 52 |
| E-7 | 4.0 | 2.0 | 8.6 | 88 | 0 | 43 | 100 | 100 | 9.0 | 2 | 18 | 53 |

The data of TABLE III show both catalysts E-6 and E-7 were effective for the conversion of heptane and carbon monoxide, and that sample E-7 exhibits superior carbon monoxide conversion at 200°C and above relative to sample E-6, while providing comparable performance with respect to heptane conversion and SO₂ oxidation.

### Lube Oil Combustion Test and Test Results

In many diesel engines the VOF in the diesel exhaust consists mainly of diesel lube oil which has been swept from the cylinder walls and comes through valve guides and turbocharger seals. A laboratory test was used to evaluate the relative performance of the catalyst powders of Example 5 below for burning diesel lube oil, as a model of the ability of the corresponding catalyst to catalyze the oxidation of the VOF in diesel engine exhaust. This test allows for the relative ranking of catalyst materials for their effectiveness of burning lube oil via the interactions between the catalyst and lube oil as they are heated together in air.
Thus, a catalyst powder sample is mixed uniformly with a measured amount of lube oil. The mixture of catalyst and lube oil (about 10-30 mg) is placed into the quartz sample pan of a simultaneous TGA/DTA instrument (Thermal Sciences STA 1500) and heated in flowing air using a standard heating ramp (20°C/min.) from ambient temperature to 1000°C.
The collected data, cumulative weight loss (TGA) and heat evolution (DTA) as a function of temperature, are normalized for the weight of catalyst sample and the amount of lube oil present. The total weight loss (TGA) measured is made up of water loss which occurs at about 100°C or less and lube oil loss either by volatilization or by combustion. The water loss occurs in a discrete step and can be thus differentiated from the lube oil losses. The exotherm (DTA Peak) is a measure of the lube oil loss due to combustion of the lube oil. These data are used to calculate a DTA Peak Area (uv-sec/mg-catalyst sample/mg-lube oil) which is used as the key measure of the catalyst's ability to catalyze the combustion of VOF (lube oil) in this test. Tests have been conducted in which catalyst powders were used to catalyze the combustion of lubricating oil and the same catalytic powders. were used to prepare catalysts supported on a substrate. Tests of such catalysts on diesel engine exhausts showed good correlation between the performance of the catalyst powder in the laboratory TGA and DTA tests and the performance of the corresponding catalyst in the engine test.

### Example 5

### TGA/DTA Lube Oil Combustion Test FCC Cat (Ceria/Zeolite)

A. A comparative catalyst material designated E-8 comprised a mixture of 50% by weight bulk ceria having a BET surface area of 143 m²/g and 50% by weight ZSM-5 H-zeolite by weight of the mixture. The catalyst was prepared by mixing the ceria and ZSM-5 powders, drying overnight at 100°C and calcining at 450°C for three hours. The catalyst material was wetted with a quantity of Cummins SAE 15 W/40 Premium blue diesel engine lube oil equal to 4% of the weight of the zeolite, and was then placed in a TGA/DTA analyzer. The results are set forth in the attached Figure 10.

B. A series of five catalyst materials embodying the present invention was prepared as generally described in Part A above, and were designated E-10, E-12, E-13, E-14 and E-15, respectively. The first of these, E-10, comprised a mixture of ceria having a surface area of 143 m²/g on which platinum had been dispersed by the incipient wetness method to provide 0.5 percent platinum thereon by weight of ceria plus platinum (Pt/Ceria) with Fe-Beta zeolite. Equal weights of Pt/ceria and zeolite were used. Samples E-12, E-13, E-14 and E-15 all comprised mixtures of zeolites, ceria and alumina, in which mixtures of equal weights of ceria plus alumina comprised 67% of the weight of the catalytic material, the zeolite (including doped metals) accounting for 33% by weight of the catalytic material. In these samples, the zeolites were doped by ion-exchange with 0.6 percent platinum by weight of the zeolite. The zeolites in these examples were Pt-ZSM-5, Pt-Y-zeolite, Pt-Fe-Beta zeolite and Pt-H-Beta zeolite, respectively.
The ability of each of these sample materials to catalyze the combustion of the lube oil was tested using thermogravimetric analysis and differential temperature analysis (TGA/DTA) techniques. In TGA/DTA studies, the heat absorbed or released and the weight lost by a sample as a function of temperature are recorded simultaneously and can be used to evaluate the capability of the material to catalyze the combustion of the lube oil. Since, as discussed above, lube oil constitutes a significant portion of the VOF particulates in diesel engine exhaust, the results of the TGA/DTA study of lube oil-doped material reflects the ability of the material to combust the VOF particulates. The amount of lube oil added to the material (10% by weight) is far in excess of the amount of VOF hydrocarbons that a diesel catalyst would ordinarily be exposed to in the time frame of this test, but this quantity is used so that reproducible results may be obtained from this test. Each oil-wetted sample was placed in a quartz pan sample holder located inside an STA/1500 Simultaneous Thermoanalyzer and heated in air at a rate of 20°C/min. from room temperature to 1000°C. The sample weights varied between 30 and 10 milligrams. For comparison, a like quantity of lube oil was placed in the analysis chamber so that the TGA/DTA curves could be corrected for water loss and vaporization.
In Figure 10, the ordinate on the left-hand side of the Figure relates to the lower curve and shows changes in the weight of the sample of oil-wetted material relative to temperature. The ordinate on the right-hand side of the Figure relates to the upper curve and shows the heat released from the sample per milligram of sample (catalyst plus lube oil) at various temperatures. The quantity of heat is measured by a thermocouple and is expressed in microvolts per milligram of catalyst plus lube oil. The distinct rise in heat release at about 200°C indicates the commencement of catalytic oxidation of the wetted oil, as does the loss in weight of the sample. One indication of the catalytic activity of the test material is the area under the DTA plot, referred to in TABLE IV as the DTA area. The DTA area is obtained by integrating the area under the curve and dividing by the lube oil weight loss as measured by TGA. The units are thus measured in micro-volt-seconds (generated by a thermocouple in response to the temperature change) per milligram of catalyst sample per milligram of lube oil. The units are abbreviated as "uv-s/mg/mg" in TABLE IV. Generally, the more catalytically active the material, the greater is the DTA area: that is, the greater is the heat release generated by combustion of the lube oil as compared to the total amount of normalized lube oil loss (resulting from combustion plus volatilization). The following TABLE IV shows the DTA area for all the samples tested in this example.

**TABLE IV**

| **Sample (Percents By Weight)** | **DTA Area uv-s/mg/mg** |
|---|---|
| E-8 (50% CeO₂ plus 50% ZSM-5) | 5,856 |
| E-10 (50% Pt/CeO₂ plus 50% Fe-Beta Z) | 14,800 |
| E-12 (67% [Al₂O₃/CeO₂]* plus 33% Pt-ZSM-5) | 12,975 |
| E-13 (67% [Al₂O₃/CeO₂]* plus 33% Pt-Y-Z) | 6,990 |
| E-14 (67% [Al₂O₃/CeO₂]* plus 33% Pt-Fe-Beta Z) | 10,200 |
| E-15 (67% [Al₂O₃/CeO₂]* plus 33% Pt-H-Beta Z) | 10,630 |

| | |
|---|---|
| * 50% Al₂O₃ plus 50% CeO₂ | |

The data of TABLE IV show that a variety of zeolites can be combined with ceria or ceria and alumina to yield materials that are catalytically active for the combustion of lube oil. Such catalytic activity, as discussed above, is indicative of the ability to reduce the VOF content of diesel exhaust.

## Claims (Claims for the following Contracting State(s): AT, BE, CH, DE, DK, ES, FR, GB, GR, IT, NL, PT, SE)

1. A catalyst composition for treating a diesel engine exhaust stream containing a volatile organic fraction comprises a refractory carrier on which is disposed a coating of a catalytic material comprising a catalytically effective amount of ceria having a BET surface area of at least about 10 m²/g and a catalytically effective amount of a zeolite wherein the zeolite is doped with a catalytic moiety selected from the group consisting of one or more of platinum, rhodium, palladium, ruthenium, osmium, iridium, copper, iron, nickel, chromium and vanadium, the coating comprising the ceria and the zeolite admixed together or the zeolite being disposed in a discrete layer which is overlain by one or more layers containing the ceria and a catalytically effective amount of alumina having a BET surface area of at least about 10m²/g.

2. A catalyst composition according to claim 1 wherein the zeolite comprises Beta zeolite.

3. A catalyst composition for treating a diesel engine exhaust stream containing a volatile organic fraction comprises a refractory carrier on which is disposed a coating of a catalytic material comprising a catalytically effective amount of ceria having a BET surface area of at least about 10 m²/g and a catalytically effective amount of a zeolite wherein the zeolite includes Beta zeolite and is doped with a catalytic moiety selected from the group consisting of one or more of platinum, rhodium, palladium, ruthenium, osmium, iridium, copper, iron, nickel, chromium and vanadium.

4. A catalyst composition according to any one of the preceding claims wherein the zeolite is selected from the group consisting of Y-zeolite, pentasil, Mordenite, and mixtures thereof.

5. A catalyst composition according to anyone of the preceding claims wherein the zeolite comprises a three-dimensional zeolite **characterised by** pore openings whose smallest cross-sectional dimension is at least about five Angstroms and having a silicon to aluminum atomic ratio of greater than 5.

6. A catalyst composition according to any one of the preceding claims, the coating comprising ceria and zeolite and further including a catalytically effective amount of alumina having a BET surface area of at least about 10 m²/g.

7. A catalyst composition according to claim 1 or claim 6 wherein the alumina is bulk alumina.

8. A composition according to claim 1, claim 6 or claim 7 wherein at least one catalytic metal moiety selected from the group consisting of platinum and palladium is dispersed on the alumina.

9. A composition according to any one of claims 1 and 6 to 8 wherein at least one catalytic metal moiety selected from the group consisting of platinum and palladium is dispersed on the ceria and alumina.

10. A catalyst composition according to any one of claims 1 and 6 to 9 wherein zeolite comprises from about 10 to 90 per cent by weight, alumina comprises from about 60 to 5 per cent by weight, and ceria comprises from about 60 to 5 per cent by weight, of the combined weight of the zeolite, the alumina and the ceria.

11. A catalyst composition according to claim 10 wherein the alumina comprises from about 50 to 20 per cent by weight, the ceria comprises from about 50 to 20 per cent by weight, of the combined weight of the zeolite, the alumina and the ceria.

12. A catalyst composition according to any one of claims 1 and 6 to 11 wherein the refractory carrier has a plurality of parallel exhaust flow passages extending therethrough and defined by passage walls on which the catalytic material is coated, and the ceria and alumina each has a BET surface area of from about 25 m²/g.

13. A catalyst composition according to any one of claims 6 to 12 wherein the ceria and the alumina each has a BET surface area of from about 25 m²/g to about 200 m²/g.

14. A catalyst composition according to any one of the preceding claims wherein the ceria is bulk ceria.

15. A composition according to claim 14 for treating a diesel engine exhaust stream comprising a catalytic material comprising bulk ceria having a BET surface area of at least about 10 m²/g, bulk ceria and iron doped Beta zeolite.

16. A composition according to any one of the preceding claims wherein at least one catalytic metal moiety selected from the group consisting of platinum and palladium is dispersed on the ceria.

17. A composition according to any of the preceding claims where at least one catalytic metal moiety selected from the group consisting of platinum and palladium is dispersed on the zeolite.

18. A catalyst composition according to any one of the preceding claims for treating a diesel engine exhaust stream containing hydrocarbons selected from the group consisting of gaseous hydrocarbons and hydrocarbons present in the volatile organic fraction comprises a refractory carrier on which is disposed a coating of a catalytic material comprising ceria having a BET surface area of at least about 10 m²/g and zeolite wherein the zeolite is doped with a catalytic metal moiety selected from the group consisting of platinum and palladium, and with a base metal moiety or hydrogen where the base metal moiety is selected from the group consisting of copper, iron, nickel, chromium and vanadium.

19. A catalyst composition according to anyone of the preceding claims wherein the zeolite is doped with a catalytic moiety selected from the group consisting of one or both of platinum and iron.

20. A catalyst composition according to claim 19 wherein the zeolite is doped with the catalytic moiety by ion-exchanging the zeolite with cationic catalytic moiety.

21. A catalyst composition according to claim 19 wherein the catalytic moiety comprises iron.

22. A catalyst composition according to claim 19 wherein the catalytic moiety comprises platinum.

23. A catalyst composition according to claim 22 wherein the refractory carrier has a plurality of parallel exhaust flow passages extending therethrough and defined by passage walls on which the catalytic material is coated, and the catalytic moiety comprises platinum and is present in a quantity sufficient to provide from about 176.5 to 2188.8 µg/cm³ (5 to 60 g/ft³) of platinum.

24. A catalyst composition according to claim 19 wherein the refractory carrier has a plurality of parallel exhaust flow passages extending therethrough and defined by passage walls on which the catalytic material is coated, and the catalytic moiety comprises from about 70.6 to 2188.8 µg/cm³ (2 to 60 g/ft³) platinum and from about 176.5 to 1765.7 µg/cm³ (5 to 50 g/ft³) iron.

25. A catalyst composition according to any one of the preceding claims wherein the refractory carrier has a plurality of parallel exhaust flow passages extending therethrough and defined by passage walls on which the catalytic material is coated, and further comprising dispersed platinum carried on the catalytic material in an amount of from about 3.5 to about 2118.8 µg/cm³ (about 0.1 to about 60 g/ft³).

26. A catalyst composition according to claim 25 wherein the dispersed platinum is present in the amount of from about 3.5 to 176.5 µg/cm³ (0.1 to 5 g/ft³).

27. A catalyst composition according to claim 25 wherein the refractory carrier has a plurality of parallel exhaust flow passages extending therethrough and defined by passage walls on which the catalytic material is coated, and at least a catalytically effective amount of the dispersed platinum is carried on the ceria.

28. A catalyst composition according to any one of the preceding claims, wherein the refractory carrier has a plurality of parallel exhaust flow passages extending therethrough and defined by passage walls on which the catalytic material is coated, and further comprising dispersed palladium carried on the catalytic material in a quantity of from 3.5 to 7062.9 µg/cm³ (0.1 to 200 g/ft³).

29. A catalyst composition according to claim 28 wherein the dispersed palladium is present in an amount of from about 706.2 to 4237.7 µg/cm³ (20 to 120 g/ft³).

30. A method for treating a diesel engine exhaust stream containing a volatile organic fraction comprising contacting the stream with a catalyst composition according to any of claims 1 to 29 under oxidizing conditions including a temperature high enough to catalyze oxidation of at least some of the volatile organic fraction.

31. A method according to claim 30 wherein the temperature of the exhaust stream initially contacted with the catalyst composition is from about 100°C to 800°C.

32. A method according to claim 30 or claim 31 for treating a diesel engine exhaust stream comprising hydrocarbons selected from the group consisting of gaseous hydrocarbons and hydrocarbons present in a volatile organic fraction further comprising the steps of:
absorbing at least some of the hydrocarbons on the catalyst;
increasing the temperature of the exhaust gas and desorbing the hydrocarbons from the catalyst; and
catalysing the oxidation of at least some of the hydrocarbons.

## Claims (Claims for the following Contracting State(s): IE, LU, MC)

1. A catalyst composition for treating a diesel engine exhaust stream containing a volatile organic fraction comprises a refractory carrier on which is disposed a coating of a catalytic material comprising a catalytically effective amount of ceria having a BET surface area of at least about 10 m²/g and a catalytically effective amount of a zeolite wherein the zeolite is doped with a catalytic moiety selected from the group consisting of one or more of platinum, rhodium, palladium, ruthenium, osmium, iridium, copper, iron, nickel, chromium and vanadium.

2. A catalyst composition according to claim 1 wherein the zeolite comprises Beta zeolite.

3. A catalyst composition according to any one of the preceding claims wherein the zeolite is selected from the group consisting of Y-zeolite, pentasil, Mordenite, and mixtures thereof.

4. A catalyst composition according to anyone of the preceding claims wherein the zeolite comprises a three-dimensional zeolite **characterised by** pore openings whose smallest cross-sectional dimension is at least about five Angstroms and having a silicon to aluminum atomic ratio of greater than 5.

5. A catalyst composition according to any one of the preceding claims further including a catalytically effective amount of alumina having a BET surface area of at least about 10 m²/g.

6. A catalyst composition according to claim 5 wherein the alumina is bulk alumina.

7. A composition according to claim 5 or claim 6 wherein at least one catalytic metal moiety selected from the group consisting of platinum and palladium is dispersed on the alumina.

8. A composition according to any one of claims 5 to 7 wherein at least one catalytic metal moiety selected from the group consisting of platinum and palladium is dispersed on the ceria and alumina.

9. A catalyst composition according to any one of claims 5 to 8 wherein the zeolite comprises from about 10 to 90 per cent by weight, the alumina comprises from about 60 to 5 per cent by weight, and the ceria comprises from about 60 to 5 per cent by weight, of the combined weight of the zeolite, the alumina and the ceria.

10. A catalyst composition according to claim 9 wherein the alumina comprises from about 50 to 20 per cent by weight, the ceria comprises from about 50 to 20 per cent by weight, of the combined weight of the zeolite, the alumina and the ceria.

11. A catalyst composition according to any of claims 5 to 10 wherein the zeolite is disposed in a discrete layer which is overlain by one or more discrete layers containing the alumina and the ceria.

12. A catalyst composition according to any one of claims 5 to 11 wherein the refractory carrier has a plurality of parallel exhaust flow passages extending therethrough and defined by passage walls on which the catalytic material is coated, and the ceria and alumina each has a BET surface area of from about 25 m²/g.

13. A catalyst composition according to any one of claims 5 to 12 wherein the ceria and the alumina each has a BET surface area of from about 25 m²/g to about 200 m²/g.

14. A catalyst composition according to any one of the preceding claims wherein the ceria is bulk ceria.

15. A composition according to claim 14 for treating a diesel engine exhaust stream comprising a catalytic material comprising bulk ceria having a BET surface area of at least about 10 m²/g, bulk ceria and iron doped Beta zeolite.

16. A composition according to any one of the preceding claims wherein at least one catalytic metal moiety selected from the group consisting of platinum and palladium is dispersed on the ceria.

17. A composition according to any of the preceding claims where at least one catalytic metal moiety selected from the group consisting of platinum and palladium is dispersed on the zeolite.

18. A catalyst composition according to any one of the preceding claims for treating a diesel engine exhaust stream containing hydrocarbons selected from the group consisting of gaseous hydrocarbons and hydrocarbons present in the volatile organic fraction comprises a refractory carrier on which is disposed a coating of a catalytic material comprising ceria having a BET surface area of at least about 10 m²/g and zeolite wherein the zeolite is doped with a catalytic metal moiety selected from the group consisting of platinum and palladium, and with a base metal moiety or hydrogen where the base metal moiety is selected from the group consisting of copper, iron, nickel, chromium and vanadium.

19. A catalyst composition according to anyone of the preceding claims wherein the zeolite is doped with a catalytic moiety selected from the group consisting of one or both of platinum and iron.

20. A catalyst composition according to claim 19 wherein the zeolite is doped with the catalytic moiety by ion-exchanging the zeolite with cationic catalytic moiety.

21. A catalyst composition according to claim 19 wherein the catalytic moiety comprises iron.

22. A catalyst composition according to claim 19 wherein the catalytic moiety comprises platinum.

23. A catalyst composition according to claim 22 wherein the refractory carrier has a plurality of parallel exhaust flow passages extending therethrough and defined by passage walls on which the catalytic material is coated, and the catalytic moiety comprises platinum and is present in a quantity sufficient to provide from about 176.5 to 2188.8 µg/cm³ 5 to 60 g/ft³ of platinum.

24. A catalyst composition according to claim 19 wherein the refractory carrier has a plurality of parallel exhaust flow passages extending therethrough and defined by passage walls on which the catalytic material is coated, and the catalytic moiety comprises from about 70.6 to 2188.8 µg/cm³ (2 to 60 g/ft³) platinum and from about 176.5 to 1765.7 µg/cm³ (5 to 50 g/ft³) iron.

25. A catalyst composition according to any one of the preceding claims wherein the refractory carrier has a plurality of parallel exhaust flow passages extending therethrough and defined by passage walls on which the catalytic material is coated, and further comprising dispersed platinum carried on the catalytic material in an amount of from about 3.5 to about 2118.8 µg/cm³ (about 0.1 to about 60 g/ft³).

26. A catalyst composition according to claim 25 wherein the dispersed platinum is present in the amount of from about 3.5 to 176.5 µg/cm³ (0.1 to 5 g/ft³).

27. A catalyst composition according to claim 23 wherein the refractory carrier has a plurality of parallel exhaust flow passages extending therethrough and defined by passage walls on which the catalytic material is coated, and at least a catalytically effective amount of the dispersed platinum is carried on the ceria.

28. A catalyst composition according to any one of the preceding claims, wherein the refractory carrier has a plurality of parallel exhaust flow passages extending therethrough and defined by passage walls on which the catalytic material is coated, and further comprising dispersed palladium carried on the catalytic material in a quantity of from 3.5 to 7062.9 µg/cm³ (0.1 to 200 g/ft³).

29. A catalyst composition according to claim 28 wherein the dispersed palladium is present in an amount of from about 706.2 to 4237.7 µg/cm³ (20 to 120 g/ft³).

30. A method for treating a diesel engine exhaust stream containing a volatile organic fraction comprising contacting the stream with a catalyst composition according to any of claims 1 to 29 under oxidizing conditions including a temperature high enough to catalyze oxidation of at least some of the volatile organic fraction.

31. A method according to claim 30 wherein the temperature of the exhaust stream initially contacted with the catalyst composition is from about 100°C to 800°C.

32. A method according to claim 30 or claim 31 for treating a diesel engine exhaust stream comprising hydrocarbons selected from the group consisting of gaseous hydrocarbons and hydrocarbons present in a volatile organic fraction further comprising the steps of:
absorbing at least some of the hydrocarbons on the catalyst;
increasing the temperature of the exhaust gas and desorbing the hydrocarbons from the catalyst; and
catalysing the oxidation of at least some of the hydrocarbons.

## Revendications (Revendications pour l'(les) Etat(s) contractant(s) suivant(s): AT, BE, CH, DE, DK, ES, FR, GB, GR, IT, NL, PT, SE)

1. Composition catalytique pour le traitement du flux d'éjection de moteurs diesels comprenant une fraction organique volatile et qui comprend un support réfractaire sur lequel est déposée une couche d'un matériau catalytique comprenant une quantité effective du point de vue catalytique d'oxyde de cérium qui a une surface BET d'au moins environ 10 m²/g et une quantité effective du point de vue catalytique de zéolite dans laquelle la zéolite est dopée avec un groupement catalytique choisi parmi le groupe constitué d'un ou plusieurs parmi le platine, le rhodium, le palladium, le ruthénium, l'osmium, l'iridium, le cuivre, le fer, le nickel, le chrome et le vanadium, le revêtement comprenant l'oxyde de cérium et la zéolite étant mélangés ensemble ou la zéolite étant disposée en une couche discrète laquelle est recouverte par une ou plusieurs couches contenant l'oxyde de cérium et une quantité effective du point de vue catalytique d'alumine ayant une surface BET d'au moins environ 10 m²/g.

2. Composition catalytique selon la revendication 1, dans laquelle la zéolite comprend de la zéolite bêta.

3. Composition catalytique pour le traitement du jet d'éjection de moteurs diesels comprenant une fraction organique volatile et qui comprend un support réfractaire sur lequel est déposée une couche de matériau catalytique comprenant une quantité effective du point de vue catalytique d'oxyde de cérium ayant une surface BET d'au moins environ 10 m²/g et une quantité effective du point de vue catalytique de zéolite dans laquelle la zéolite comprend de la zéolite bêta et est dopée avec un groupement catalytique choisi parmi le groupe constitué d'un ou plusieurs parmi le platine, le rhodium, le palladium, le ruthénium, l'osmium, l'iridium, le cuivre, le fer, le nickel, le chrome et le vanadium.

4. Composition catalytique selon l'une quelconque des revendications précédentes, dans laquelle la zéolite est choisie parmi le groupe constitué de la zéolite Y, le pentasil, la mordénite, et leurs mélanges.

5. Composition catalytique selon l'une quelconque des revendications précédentes, dans laquelle la zéolite comprend une zéolite à trois dimensions **caractérisée par** des ouvertures de pores dont la plus petite dimension de coupe transversale est au moins d'environ cinq Angstrom et ayant un rapport atomique silicium à aluminium supérieur à 5.

6. Composition catalytique selon l'une quelconque des revendications précédentes, la couche comprenant l'oxyde de cérium et la zéolite et contenant de plus une quantité effective du point de vue catalytique d'alumine ayant une surface BET d'au moins 10 m²/g.

7. Composition catalytique selon la revendication 1 ou la revendication 6, dans laquelle l'alumine est de l'alumine en vrac.

8. Composition selon la revendication 1 ou la revendication 6 ou la revendication 7, dans laquelle au moins un groupement métallique catalytique choisi parmi le groupe constitué du platine et du palladium est dispersé sur l'alumine.

9. Composition selon l'une quelconque des revendications 1 et 6 à 8, dans laquelle au moins un groupement métallique catalytique choisi parmi le groupe constitué du platine et du palladium est dispersé sur l'oxyde de cérium et l'alumine.

10. Composition catalytique selon l'une quelconque des revendications 1 et 6 à 9, dans laquelle la zéolite comprend environ 10 à 90 pour cent en poids, l'alumine comprend environ 60 à 5 pour cent en poids, et l'oxyde de cérium comprend environ 60 à 5 pour cent en poids, du poids combiné de la zéolite, de l'alumine et de l'oxyde de cérium.

11. Composition catalytique selon la revendication 10, dans laquelle l'alumine comprend environ 50 à 20 pour cent en poids, l'oxyde de cérium comprend 50 à 20 pour cent en poids, du poids combiné de la zéolite, de l'alumine et de l'oxyde de cérium.

12. Composition catalytique selon l'une quelconque des revendications 1 et 6 à 11, dans laquelle le support réfractaire possède une pluralité de passages parallèles pour les gaz d'éjection s'étendant au travers du support et définis par les parois des passages sur lesquels le matériau catalytique est appliqué, et l'oxyde de cérium et l'alumine ont chacun une surface BET d'environ 25 m²/g.

13. Composition catalytique selon l'une quelconque des revendications 6 à 12, dans laquelle l'oxyde de cérium et l'alumine ont chacun une surface BET d'environ 25 m²/g à environ 200 m²/g.

14. Composition catalytique selon l'une quelconque des revendications précédentes, dans laquelle l'oxyde de cérium est de l'oxyde de cérium en vrac.

15. Composition catalytique selon la revendication 14 pour le traitement des jets d'éjection de moteurs diesels comprenant un matériau catalytique qui comprend de l'oxyde de cérium en vrac ayant une surface BET d'au moins 10 m²/g, de l'oxyde de cérium en vrac et de la zéolite Bêta dopée au fer.

16. Composition selon l'une quelconque des revendications précédentes, dans laquelle au moins un groupement métallique catalytique choisi parmi le groupe comprenant du platine et du palladium est dispersé sur l'oxyde de cérium.

17. Composition selon l'une quelconque des revendications précédentes, où au moins un groupement métallique catalytique choisi parmi le groupe constitué du platine et du palladium est dispersé sur la zéolite.

18. Composition catalytique selon l'une quelconque des revendications précédentes pour le traitement des flux d'éjection de moteurs diesels contenant des hydrocarbures choisis parmi le groupe constitué des hydrocarbures gazeux et des hydrocarbures présents dans la fraction organique volatile et qui comprend un support réfractaire sur lequel est déposée une couche de matériau catalytique comprenant de l'oxyde de cérium ayant une surface BET d'au moins environ 10 m²/g et de la zéolite dans laquelle la zéolite est dopée avec un groupement métallique catalytique choisi parmi le groupe constitué du platine et du palladium, et avec un groupement métallique commun ou un hydrogène où le groupement métallique commun est choisi parmi le groupe constitué du cuivre, du fer, du nickel, du chrome et du vanadium.

19. Composition catalytique selon l'une quelconque des revendications précédentes, dans laquelle la zéolite est dopée avec un groupement catalytique choisi parmi le groupe constitué du platine ou du fer, ou des deux.

20. Composition catalytique selon la revendication 19, dans laquelle la zéolite est dopée avec un groupement catalytique par échange d'ions entre la zéolite et un groupement catalytique cationique.

21. Composition catalytique selon la revendication 19, dans laquelle le groupement catalytique comprend du fer.

22. Composition catalytique selon la revendication 19, dans laquelle le groupement catalytique comprend du platine.

23. Composition catalytique selon la revendication 22, dans laquelle le support réfractaire possède une pluralité de passages parallèles de jets d'éjection s'étendant à travers celui-ci et définis par les parois des passages sur lesquelles le matériau catalytique est appliqué, et le groupement catalytique comprend du platine et est présent en une quantité suffisante pour fournir environ 176,5 à 2188,8 µg/cm³ (5 à 60 g/pi³) de platine.

24. Composition catalytique selon la revendication 19, dans laquelle le support réfractaire possède une pluralité de passages parallèles de jets d'éjection s'étendant à travers celui-ci et définis par les parois des passages sur lesquelles le matériau catalytique est appliqué, et le groupement catalytique comprend environ 70,6 à 2188,8 µg/cm³ (2 à 60 g/pi³) de platine et environ 176,5 à 1765,7 µg/cm³ (5 à 50 g/pi³) de fer.

25. Composition catalytique selon l'une quelconque des revendications précédentes, dans laquelle le support réfractaire possède une pluralité de passages parallèles de jets d'éjection s'étendant à travers celui-ci et définis par des parois de passages sur lesquelles le matériau catalytique est appliqué, et qui comprend de plus du platine dispersé appliqué sur le matériau catalytique en une quantité d'environ 3,5 à environ 2118,8 µg/cm³ (environ 0,1 à environ 60 g/pi³).

26. Composition catalytique selon la revendication 25 dans laquelle le platine dispersé est présent en une quantité d'environ 3,5 à 1765 µg/cm³ (0,1 à 5 g/pi³).

27. Composition catalytique selon la revendication 25, dans laquelle le support réfractaire possède une pluralité de passages parallèles de jets d'éjection traversant celui-ci et définis par des parois de passages sur lesquelles le matériau catalytique est appliqué, et au moins une quantité effective du point de vue catalytique du platine dispersé est portée par l'oxyde de cérium.

28. Composition catalytique selon l'une quelconque des revendications précédentes, dans laquelle le support réfractaire possède une pluralité de passages parallèles s'étendant au travers de celui-ci et définis par des parois de passages sur lesquelles le matériau catalytique est appliqué, et comprenant de plus du palladium dispersé porté par le matériau catalytique en une quantité de 3,5 à 7062,9 µg/cm³ (0,1 à 200 g/pi³).

29. Composition catalytique selon la revendication 28, dans laquelle le palladium est présent en une quantité d'environ 706,2 à 4237,7 µg/cm³ (20 à 120 g/pi³).

30. Procédé pour le traitement des jets d'éjection de moteurs diesels contenant une fraction organique volatile et qui comprend la mise en contact du jet avec la composition catalytique selon l'une quelconque des revendications 1 à 29 dans des conditions d'oxydation, comprenant une température suffisamment élevée pour catalyser l'oxydation d'au moins une partie de la fraction organique volatile.

31. Procédé selon la revendication 30, dans laquelle la température du jet d'élection qui a initialement été mis en contact avec la composition catalytique est d'environ 100 °C à 800 °C.

32. Procédé selon la revendication 30 ou la revendication 31 pour le traitement des jets d'éjection des moteurs diesels comprenant des hydrocarbures choisis parmi le groupe constitué des hydrocarbures gazeux et des hydrocarbures présents dans la fraction organique volatile et qui comprend de plus les étapes :
■ d'absorption d'au moins une partie des hydrocarbures sur le catalyseur ;
■ d'augmentation de la température des gaz d'échappement et la désorption des hydrocarbures du catalyseur ; et
■ de catalyse de l'oxydation pour au moins une partie des hydrocarbures.

## Revendications (Revendications pour l'(les) Etat(s) contractant(s) suivant(s): IE, LU, MC)

1. Composition catalytique pour le traitement du jet d'éjection de moteurs diesels comprenant une fraction organique volatile et qui comprend un support réfractaire sur lequel est déposée une couche de matériau catalytique comprenant une quantité effective du point de vue catalytique d'oxyde de cérium ayant une surface BET d'au moins environ 10 m²/g et une quantité effective du point de vue catalytique de zéolite dans laquelle la zéolite est dopée à l'aide d'un groupement catalytique choisi parmi le groupe constitué d'un ou plusieurs parmi le platine, le rhodium, le palladium, le ruthénium, l'osmium, l'iridium, le cuivre, le fer, le nickel, le chrome et le vanadium.

2. Composition catalytique selon la revendication 1, dans laquelle la zéolite comprend de la zéolite bêta.

3. Composition catalytique selon l'une quelconque des revendications précédentes, dans laquelle la zéolite est choisie parmi le groupe constitué de la zéolite Y, le pentasil, la mordénite, et leurs mélanges.

4. Composition catalytique selon l'une quelconque des revendications précédentes, dans laquelle la zéolite comprend une zéolite à trois dimensions **caractérisée par** des ouvertures de pores dont la plus petite dimension de coupe transversale est au moins d'environ cinq Angstrom et ayant un rapport atomique silicium à aluminium supérieur à 5.

5. Composition catalytique selon l'une quelconque des revendications précédentes, qui contient de plus une quantité effective du point de vue catalytique d'alumine ayant une surface BET d'au moins 10 m²/g.

6. Composition catalytique selon la revendication 5, dans laquelle l'alumine est de l'alumine en vrac.

7. Composition catalytique selon la revendication 5 ou la revendication 6, dans laquelle au moins un groupement métallique catalytique choisi parmi le groupe constitué du platine et du palladium est dispersé sur l'alumine.

8. Composition catalytique selon l'une quelconque des revendications 5 à 7, dans laquelle au moins un groupement métallique catalytique choisi parmi le groupe constitué du platine et dsu palladium est dispersé sur l'oxyde de cérium et l'alumine.

9. Composition catalytique selon l'une quelconque des revendications 5 à 8, dans laquelle la zéolite comprend environ 9 à 90 pour cent en poids, l'alumine comprend environ 60 à 5 pour cent en poids, et l'oxyde de cérium comprend environ 60 à 5 pour cent en poids, du poids combiné de la zéolite, de l'alumine et de l'oxyde de cérium.

10. Composition catalytique selon la revendication 9, dans laquelle l'alumine comprend environ 50 à 20 pour cent en poids, l'oxyde de cérium comprend 50 à 20 pour cent en poids, du poids combiné de la zéolite, de l'alumine et de l'oxyde de cérium.

11. Composition catalytique selon l'une quelconque des revendications 5 à 10, dans laquelle la zéolite est déposée en une couche discrète laquelle est recouverte par une ou plusieurs couches discrètes contenant l'alumine et l'oxyde de cérium.

12. Composition catalytique selon l'une quelconque des revendications 5 à 11, dans laquelle le support réfractaire possède une pluralité de passages parallèles de jets d'éjection s'étendant au travers de celui-ci et définis par des parois de passages sur lesquelles le matériau catalytique est appliqué, et l'oxyde de cérium et l'alumine possède chacun une surface BET d'environ 25 m²/g.

13. Composition catalytique selon l'une quelconque des revendications 5 à 12, dans laquelle l'oxyde de cérium et l'alumine ont chacun une surface BET d'environ 25 m²/g à environ 200 m²/g.

14. Composition catalytique selon l'une quelconque des revendications précédentes, dans laquelle l'oxyde de cérium est de l'oxyde de cérium en vrac.

15. Composition catalytique selon la revendication 14 pour le traitement des flux d'éjection de moteurs diesels comprenant un matériau catalytique qui comprend de l'oxyde de cérium en vrac ayant une surface BET d'au moins 10 m²/g, de l'oxyde de cérium en vrac et de la zéolite Bêta dopée au fer.

16. Composition catalytique selon l'une quelconque des revendications précédentes, dans laquelle au moins un groupement métallique catalytique choisi parmi le groupe constitué du platine et du palladium est dispersé sur l'oxyde de cérium.

17. Composition catalytique selon l'une quelconque des revendications précédentes, ou au moins un groupement métallique catalytique choisi parmi le groupe constitué du platine et du palladium est dispersé sur la zéolite.

18. Composition catalytique selon l'une quelconque des revendications précédentes pour le traitement des flux d'éjections de moteurs diesels contenant des hydrocarbures choisis parmi le groupe constitué des hydrocarbures gazeux et des hydrocarbures présents dans la fraction organique volatile comprend un support réfractaire sur lequel est déposée une couche de matériau catalytique comprenant de l'oxyde de cérium ayant une surface BET d'au moins environ 10 m²/g et de la zéolite dans laquelle la zéolite est dopé avec un groupement métallique catalytique choisi parmi le groupe constitué du platiné et du palladium, et avec un groupement métallique commun ou un hydrogène où le groupement métallique commun est choisi parmi le groupe constitue du cuivre, du fer, du nickel, du chrome et du vanadium.

19. Composition catalytique selon l'une quelconque des revendications précédentes, dans laquelle la zéolite est dopée avec un groupement catalytique choisi parmi le groupe constitué du platine ou du fer, ou des deux.

20. Composition catalytique selon la revendication 19, dans laquelle la zéolite est dopée avec un groupement catalytique par échange d'ions entre la zèolite et un groupement catalytique cationique.

21. Composition catalytique selon la revendication 19, dans laquelle le groupement catalytique comprend du fer.

22. Composition catalytique selon la revendication 19, dans laquelle le groupement catalytique comprend du platine.

23. Composition catalytique selon la revendication 22, dans laquelle le support réfractaire possède une pluralité de passages parallèles de jets d'éjection s'étendant à travers celui-ci et définis par les parois des passages sur lesquelles le matériau catalytique est appliqué, et le groupement catalytique comprend du platine et est présent en une quantité suffisante pour fournir environ 176,5 à 2188,8 µg/cm³ (5 à 60 g/pi³) de platine.

24. Composition catalytique selon la revendication 19, dans laquelle le support réfractaire possède une pluralité de passages parallèles de jets d'éjection s'étendant à travers celui-ci et définis par les parois des passages sur lesquelles le matériau catalytique est appliqué, et le groupement catalytique comprend environ 70,6 à 2188,8 µg/cm³ (2 à 60 g/pi³) de platine et environ 176,5 à 1765,7 µg/cm³ (5 à 50 g/pi³) de fer.

25. Composition catalytique selon l'une quelconque des revendications précédentes, dans laquelle le support réfractaire possède une pluralité de passages parallèles de jets d'éjection s'étendant à travers celui-ci et définis par des parois de passages sur lesquelles le matériau catalytique est appliqué, et qui comprend de plus du platine dispersé appliqué sur le matériau catalytique en une quantité d'environ 3,5 à environ 2118,8 µg/cm³ (environ 0,1 à environ 60 g/pi³).

26. Composition catalytique selon la revendication 25 dans laquelle le platine dispersé est présent en une quantité d'environ 3,5 à 1765 µg/cm³ (0,1 à 5 g/pi³).

27. Composition catalytique selon la revendication 23, dans laquelle le support réfractaire possède une pluralité de passages parallèles de jets d'éjection traversant celui-ci et définis par des parois de passages sur lesquelles le matériau catalytique est appliqué, et au moins une quantité effective du point de vue catalytique du platine dispersé est portée par l'oxyde de cérium.

28. Composition catalytique selon l'une quelconque des revendications précédentes, dans laquelle le support réfractaire possède une pluralité de passages parallèles s'étendant au travers de celui-ci et définis par des parois de passages sur lesquelles le matériau catalytique est appliqué, et comprenant de plus du palladium dispersé porté par le matériau catalytique en une quantité de 3,5 à 7062,9 µg/cm³ (0,1 à 200 g/pi³).

29. Composition catalytique selon la revendication 28, dans laquelle le palladium dispersé est présent en une quantité d'environ 706,2 à 4237,7 µg/cm³ (20 à 120 g/pi³).

30. Procédé pour le traitement des jets d'éjection de moteurs diesels contenant une fraction organique volatile et qui comprend la mise en contact du jet avec la composition catalytique selon l'une quelconque des revendications 1 à 29 dans des conditions d'oxydation comprenant une température suffisamment élevée pour catalyser l'oxydation d'au moins une partie de la fraction organique volatile.

31. Procédé selon la revendication 30, dans laquelle la température du jet d'éjection qui a initialement été mis en contact avec la composition catalytique est d'environ 100 °C à 800 °C.

32. Procédé selon la revendication 30 ou la revendication 31 pour le traitement des jets d'éjection des moteurs diesels et qui comprend des hydrocarbures choisis parmi le groupe constitué des hydrocarbures gazeux et des hydrocarbures présents dans la fraction organique volatile et qui comprend de plus les étapes :
■ d'absorption d'au moins une partie des hydrocarbures sur le catalyseur ;
■ d'augmentation de la température des gaz d'échappement et de la désorption des hydrocarbures du catalyseur ; et
■ de catalyse de l'oxydation pour au moins une partie des hydrocarbures.

## Patentansprüche (Patentansprüche für folgende(n) Vertragsstaat(en): AT, BE, CH, DE, DK, ES, FR, GB, GR, IT, NL, PT, SE)

1. Katalysatorzusammensetzung zur Behandlung eines eine flüchtige, organische Fraktion enthaltenden Dieselmotorabgasstroms, die einen hitzebeständigen Träger enthält, auf welchem eine Beschichtung aus einem katalytischen Material angeordnet ist, das eine katalytisch wirksame Menge von Ceroxid mit einer BET-Oberfläche von wenigstens etwa 10 m²/g und eine katalytisch wirksame Menge eines Zeoliths enthält, worin der Zeolith mit einer katalytischen Komponente dotiert ist, ausgewählt aus der Gruppe bestehend aus einem oder mehreren von Platin, Rhodium, Palladium, Ruthenium, Osmium, Iridium, Kupfer, Eisen, Nickel, Chrom und Vanadium, wobei die Beschichtung das Ceroxid und den Zeolith miteinander vermischt enthält, oder der Zeolith in einer getrennten Schicht angeordnet ist, die mit einer oder mehreren Schichten überschichtet ist, welche das Ceroxid und eine katalytisch wirksame Menge von Aluminiumoxid mit einer BET-Oberfläche von wenigstens etwa 10 m²/g enthalten.

2. Katalysatorzusammensetzung nach Anspruch 1, worin der Zeolith Beta-Zeolith umfasst.

3. Katalysatorzusammensetzung zur Behandlung eines eine flüchtige, organische Fraktion enthaltenden Dieselmotorabgasstroms, die einen hitzebeständigen Träger enthält, auf welchem eine Beschichtung aus einem katalytischen Material angeordnet ist, das eine katalytisch wirksame Menge von Ceroxid mit einer BET-Oberfläche von wenigstens etwa 10 m²/g und eine katalytisch wirksame Menge eines Zeoliths enthält, worin der Zeolith Beta-Zeolith umfasst und mit einer katalytischen Komponente, ausgewählt aus der Gruppe bestehend aus einem oder mehreren von Platin, Rhodium, Palladium, Ruthenium, Osmium, Iridium, Kupfer, Elsen, Nickel, Chrom und Vanadium, dotiert ist.

4. Katalysatorzusammensetzung nach einem der vorhergehenden Ansprüche, worin der Zeolith ausgewählt ist aus der Gruppe bestehend aus Y-Zeolith, Pentasil, Mordenit und Mischungen davon.

5. Katalysatorzusammensetzung nach einem der vorhergehenden Ansprüche, worin der Zeolith einen dreidimensionalen Zeolith umfasst, **gekennzeichnet durch** Porenöffnungen, deren kleinste Querschnittsabmessung wenigstens etwa 5 Ångström beträgt und ein Atomverhältnis von Silicium zu Aluminium von größer als 5 hat.

6. Katalysatorzusammensetzung nach einem der vorhergehenden Ansprüche, wobei die Beschichtung Ceroxid und Zeolith umfasst und weiter eine katalytisch wirksame Menge von Aluminiumoxid mit einer BET-Oberfläche von wenigstens etwa 10 m²/g enthält.

7. Katalysatorzusammensetzung nach Anspruch 1 oder Anspruch 6, worin das Aluminiumoxid Bulk-Aluminiumoxid ist.

8. Zusammensetzung nach Anspruch 1, Anspruch 6 oder Anspruch 7, worin wenigstens eine katalytische Metallkomponente, ausgewählt aus der Gruppe bestehend aus Platin und Palladium, auf dem Aluminiumoxid fein verteilt ist.

9. Zusammensetzung nach einem der Ansprüche 1 und 6 bis 8, worin wenigstens eine katalytische Metallkomponente, ausgewählt aus der Gruppe bestehend aus Platin und Palladium, auf dem Ceroxid und Aluminiumoxid fein verteilt ist.

10. Katalysatorzusammensetzung nach einem der Ansprüche 1 und 6 bis 9, worin Zeolith etwa 10 bis 90 Gew.-%, Aluminiumoxid etwa 60 bis 5 Gew.-% und Ceroxid etwa 60 bis 5 Gew.-% des Gesamtgewichts des Zeoliths, des Aluminiumoxids und des Ceroxids umfasst.

11. Katalysatorzusammensetzung nach Anspruch 10, worin das Aluminiumoxid etwa 50 bis 20 Gew.-% und das Ceroxid etwa 50 bis 20 Gew.-% des Gesamtgewichts des Zeoliths, des Aluminiumoxids und des Ceroxids umfasst.

12. Katalysatorzusammensetzung nach einem der Ansprüche 1 und 6 bis 11, worin der hitzebeständige Träger eine Vielzahl von parallelen Abgasdurchlässen hat, die sich durch ihn hindurch erstrecken und durch Durchlasswände begrenzt sind, auf welchen das katalytische Material aufgebracht ist, und das Ceroxid und Aluminiumoxid jeweils eine BET-Oberfläche von etwa 25 m²/g haben.

13. Katalysatorzusammensetzung nach einem der Ansprüche 6 bis 12, worin das Ceroxid und das Aluminiumoxid jeweils eine BET-Oberfläche von etwa 25 m²/g bis etwa 200 m²/g haben.

14. Katalysatorzusammensetzung nach einem der vorhergehenden Ansprüche, worin das Ceroxid Bulk-Ceroxid ist.

15. Zusammensetzung nach Anspruch 14 zur Behandlung eines Dieselmotorabgasstroms, die ein katalytisches Material umfasst, das Bulk-Ceroxid mit einer BET-Oberfläche von wenigstens etwa 10 m²/g, Bulk-Ceroxid und mit Eisen dotierten Beta-Zeolith enthält.

16. Zusammensetzung nach einem der vorhergehenden Ansprüche, worin wenigstens eine katalytische Metallkomponente, ausgewählt aus der Gruppe bestehend aus Platin und Palladium, auf dem Ceroxid fein verteilt ist.

17. Zusammensetzung nach einem der vorhergehenden Ansprüche, worin wenigstens eine katalytische Metallkomponente, ausgewählt aus der Gruppe bestehend aus Platin und Palladium, auf dem Zeolith fein verteilt ist.

18. Katalysatorzusammensetzung nach einem der vorhergehenden Ansprüche zur Behandlung eines Dieselmotorabgasstroms, der Kohlenwasserstoffe enthält, ausgewählt aus der Gruppe bestehend aus gasförmigen Kohlenwasserstoffen und in der flüchtigen, organischen Fraktion vorhandenen Kohlenwasserstoffen, die einen hitzebeständigen Träger enthält, auf welchem eine Beschichtung aus einem katalytischen Material angeordnet ist, das Ceroxid mit einer BET-Oberfläche von wenigstens etwa 10 m²/g und Zeolith umfasst, worin der Zeolith mit einer katalytischen Metallkomponente, ausgewählt aus der Gruppe bestehend aus Platin und Palladium, und mit einer Basenmetalikomponente oder Wasserstoff dotiert ist, worin die Basenmetallkomponente ausgewählt ist aus der Gruppe bestehend aus Kupfer, Eisen, Nickel, Chrom und Vanadium.

19. Katalysatorzusammensetzung nach einem der vorhergehenden Ansprüche, worin der Zeolith mit einer katalytischen Komponente, ausgewählt aus der Gruppe bestehend aus einem oder beiden von Platin und Eisen, dotiert ist.

20. Katalysatorzusammensetzung nach Anspruch 19, worin der Zeolith mit der katalytischen Komponente durch eine Ionenaustauschbehandlung des Zeoliths mit kationischer, katalytischer Komponente dotiert ist.

21. Katalysatorzusammensetzung nach Anspruch 19, worin die katalytische Komponente Eisen umfasst.

22. Katalysatorzusammensetzung nach Anspruch 19, worin die katalytische Komponente Platin umfasst.

23. Katalysatorzusammensetzung nach Anspruch 22, worin der hitzebeständige Trager eine Vielzahl von parallelen Abgasdurchlässen hat, die sich durch ihn hindurch erstrecken und durch Durchlasswände begrenzt sind, auf welche das katalytische Material aufgebracht ist, und die Katalytische Komponente Platin umfasst und in einer Menge vorhanden ist, die ausreicht, um etwa 176,5 bis 2188,8 µg/cm³ (5 bis 60 g/ft³) Platin bereit zu stellen.

24. Katalysatorzusammensetzung nach Anspruch 19, worin der hitzebestähdige Träger eine Vielzahl von parallelen Abgasdurchlässen hat, die sich durch ihn hindurch erstrecken und durch Durchlasswände begrenzt sind auf weiche das katalytische Material aufgebracht ist, und die katalytische Komponente etwa 70,6 bis 2188.8 µg/cm³ (2 bis 60 g/ft³) Platin und etwa 176.5 bis 1765.7 µg/cm³ (5 bis 50 g/ft³) Eisen enthält.

25. Katalysatorzusammensetzung nach einem der vorhergehenden Ansprüche, worin der hitzebeständige Träger eine Vielzahl von parallelen Abgasdurchlässen hat, die sich durch ihn hindurch erstrecken und durch Durchlasswände begrenzt sind, auf welche das katalytische Material aufgebracht ist, und weiter fein verteiltes, auf dem katalytischen Material befindliches Platin in einer Menge von etwa 3,5 bis etwa 2118,8 µg/cm³ (etwa 0,1 bis etwa 60 g/ft³) enthält.

26. Katalysatorzusammensetzung nach Anspruch 25, worin das fein verteilte Platin in einer Menge von etwa 3,5 bis 176,5 µg/cm³ (0.1 bis 5 g/ft³) vorhanden ist.

27. Katalysatorzusammensetzung nach Anspruch 25, worin der hitzebeständige Träger eine Vielzahl von parallelen Abgasdurchlässen hat, die sich durch ihn hindurch erstrecken und durch Durchlasswände begrenzt sind, auf welche das katalytische Material aufgebracht ist, und sich wenigstens eine katalytisch wirksame Menge des fein verteilten Platins auf dem Ceroxid befindet.

28. Katalysatorzusammensetzung nach einem der vorhergehenden Ansprüche, worin der hitzebeständige Träger eine Vielzahl von parallelen Abgasdurchlässen hat, die sich durch ihn hindurch erstrecken und durch Durchlasswände begrenzt sind, auf welche das katalytische Material aufgebracht ist, und weiter fein verteiltes, auf dem katalytischen Material befindliches Palladium in einer Menge von 3,5 bis 7062,9 µg/cm³ (0,1 bis 200 g/ft³) enthält.

29. Katalysatorzusammensetzung nach Anspruch 28, worin das fein verteilte Palladium in einer Menge von etwa 706,2 bis 4237,7 µg/cm³ (20 bis 120 g/ft³) vorhanden ist.

30. Verfahren zur Behandlung eines Dieselmotorabgasstroms, der eine flüchtige, organische Fraktion enthält, umfassend das Inberührungbringen des Stroms mit einer Katalysatorzusammensetzung nach einem der Ansprüche 1 bis 29 unter oxidierenden Bedingungen, die eine Temperatur einschließen, die hoch genug ist, um die Oxidation von wenigstens einem Teil der flüchtigen, organischen Fraktion zu katalysieren.

31. Verfahren nach Anspruch 30, worin die Temperatur des Abgasstroms, der anfänglich mit der Katalysatorzusammensetzung in Berührung gebracht wird, etwa 100°C bis 800°C beträgt.

32. Verfahren nach Anspruch 30 oder Anspruch 31 zur Behandlung eines Dieselmotorabgasstroms, der Kohlenwasserstoffe enthalt, ausgewählt aus der Gruppe bestehend aus gasförmigen Kohlenwasserstoffen und in einer flüchtigen, organischen Fraktion vorhandenen Kohlenwasserstoffen, umfassend weiter die Schritte:
Absorbieren von wenigstens einem Teil der Kohlenwasserstoffe auf dem Katalysator;
Erhöhen der Temperatur des Abgases und Desorbieren der Kohlenwasserstoffe von dem Katalysator; und
Katalysieren der Oxidation von wenigstens einem Teil der Kohlenwasserstoffe.

## Patentansprüche (Patentansprüche für folgende(n) Vertragsstaat(en): IE, LU, MC)

1. Katalysatorzusammensetzung zur Behandlung eines eine flüchtige, organische Fraktion enthaltenden Dieselmotorabgasstroms, die einen hitzebeständigen Träger enthält, auf welchem eine Beschichtung aus einem katalytischen Material angeordnet ist, das eine katalytisch wirksame Menge von Ceroxid mit einer BET-Oberfläche von wenigstens etwa 10 m²/g und eine katalytisch wirksame Menge eines Zeoliths enthält, worin der Zeolith mit einer katalytischen Komponente, ausgewählt aus der Gruppe bestehend aus einem oder mehreren von Platin, Rhodium, Palladium, Ruthenium, Osmium, Iridium, Kupfer, Eisen, Nickel, Chrom und Vanadium, dotiert ist.

2. Katalysatorzusammensetzung nach Anspruch 1, worin der Zeolith Beta-Zeolith umfasst.

3. Katalysatorzusammensetzung nach einem der vorhergehenden Ansprüche, worin der Zeolith ausgewählt ist aus der Gruppe bestehend aus Y-Zeolith, Pentasil, Mordenit und Mischungen davon.

4. Katalysatorzusammensetzung nach einem der vorhergehenden Ansprüche, worin der Zeolith einen dreidimensionalen Zeolith umfasst, **gekennzeichnet durch** Porenöffnungen, deren kleinste Querschnittsabmessung wenigstens etwa 5 Ångström beträgt und ein Atomverhälthis von Silicium zu Aluminium von größer als 5 hat.

5. Katalysatorzusammensetzung nach einem der vorhergehenden Ansprüche, die weiter eine katalytisch wirksame Menge von Aluminiumoxid mit einer BET-Oberfläche von wenigstens etwa 10 m²/g enthält.

6. Katalysatorzusammensetzung nach Anspruch 5, worin das Aluminiumoxid Bulk-Aluminiumoxid ist.

7. Zusammensetzung nach Anspruch 5 oder Anspruch 6, worin wenigstens eine katalytische Metallkomponente, ausgewählt aus der Gruppe bestehend aus Platin und Palladium, auf dem Aluminiumoxid fein verteilt ist.

8. Zusammensetzung nach einem der Ansprüche 5 bis 7, worin wenigstens eine katalytische Metallkomponente, ausgewählt aus der Gruppe bestehend aus Platin und Palladium, auf dem Ceroxid und Aluminiumoxid fein verteilt ist.

9. Katalysatorzusammensetzung nach einem der Ansprüche 5 bis 8, worin der Zeolith etwa 10 bis 90 Gew.-%. das Aluminiumoxid etwa 60 bis 5 Gew.-% und das Ceroxid etwa 60 bis 5 Gew.-% des Gesamtgewichts des Zeoliths, des Aluminiumoxids und des Ceroxids umfasst.

10. Katalysatorzusammensetzung nach Anspruch 9, worin das Aluminiumoxid etwa 50 bis 20 Gew.-% und das Ceroxid etwa 50 bis 20 Gew.-% des Gesamtgewichts des Zeoliths, des Aluminiumoxids und des Ceroxids umfasst.

11. Katalysatorzusammensetzung nach einem der Ansprüche 5 bis 10, worin der Zeolith in einer getrennten Schicht angeordnet ist, die mit einer oder mehreren getrennten Schichten überschichtet ist, weiche das Aluminiumoxid und das Ceroxid enthalten.

12. Katalysatorzusammensetzung nach einem der Ansprüche 5 bis 11, worin der hitzebeständige Träger eine Vielzahl von parallelen Abgasdurchlässen hat, die sich durch ihn hindurch erstrecken und durch Durchlasswände begrenzt sind, auf welchen das katalytische Material aufgebracht ist, und das Ceroxid und Aluminiumoxid jeweils eine BET-Oberfläche von etwa 25 m²/g haben.

13. Katalysatorzusammensetzung nach einem der Ansprüche 5 bis 12, worin das Ceroxid und das Aluminiumoxid jeweils eine BET-Oberfläche von etwa 25 m²/g bis etwa 200 m²/g haben.

14. Katalysatorzusammensetzung nach einem der vorhergehenden Ansprüche, worin das Ceroxid Bulk-Ceroxid ist.

15. Zusammensetzung nach Anspruch 14 zur Behandlung elnes Dieselmotorabgasstroms, die ein katalytisches Material umfasst, das Bulk-Ceroxid mit einer BET-Oberfläche von wenigstens etwa 10 m²/g, Bulk-Ceroxid und mit Eisen dotierten Beta-Zeolith enthält.

16. Zusammensetzung nach einem der vorhergehenden Ansprüche, worin wenigstens eine katalytische Metallkomponente, ausgewählt aus der Gruppe bestehend aus Platin und Palladium, auf dem Ceroxid fein verteilt ist.

17. Zusammensetzung nach einem der vorhergehenden Ansprüche, worin wenigstens eine katalytische Metallkomponente, ausgewählt aus der Gruppe bestehend aus Platin und Palladium, auf dem Zeolith fein verteilt ist.

18. Katalysatorzusammensetzung nach einem der vorhergehenden Ansprüche zur Behandlung eines Dieselmotorabgasstroms, der Kohlenwasserstoffe enthält, ausgewählt aus der Gruppe bestehend aus gasförmigen Kohlenwasserstoffen und in der flüchtigen, organischen Fraktion vorhandenen Kohlenwasserstoffen, die einen hitzebeständigen Träger enthält, auf welchem eine Beschichtung aus einem katalytischen Material angeordnet ist, das Ceroxid mit einer BET-Oberfläche von wenigstens etwa 10 m²/g und Zeolith umfasst, worin der Zeolith mit einer katalytischen Metallkomponente, ausgewählt aus der Gruppe bestehend aus Platin und Palladium, und mit einer Basenmetallkomponente oder Wasserstoff dotiert ist, worin die Basenmetallkomponente ausgewählt ist aus der Gruppe bestehend aus Kupfer, Eisen, Nickel, Chrom und Vanadium.

19. Katalysatorzusammensetzung nach einem der vorhergehenden Ansprüche, worin der Zeolith mit einer katalytischen Komponente, ausgewählt aus der Gruppe bestehend aus einem oder beiden von Platin und Eisen, dotiert ist.

20. Katalysatorzusammensetzung nach Anspruch 19, worin der Zeolith mit der katalytischen Komponente durch eine lonenaustauschbehandlung des Zeoliths mit kationischer, katalytischer Komponente dotiert ist.

21. Katalysatorzusammensetzung nach Anspruch 19, worin die katalytische Komponente Eisen umfasst.

22. Katalysatorzusammensetzung nach Anspruch 19, worin die katalytische Komponente Platin umfasst.

23. Katalysatorzusammensetzung nach Anspruch 22, worin der hitzebeständige Träger eine Vielzahl von parallelen Abgasdurchlässen hat, die sich durch ihn hindurch erstrecken und durch Durchlasswände begrenzt sind, auf welche das katalytische Material aufgebracht ist, und die katalytische Komponente Platin umfasst und in einer Menge vorhanden ist, die ausreicht, um etwa 176,5 bis 2188.8 µg/cm³ (5 bis 60 g/ft³) Platin bereit zu stellen.

24. Katalysatorzusammensetzung nach Anspruch 19, worin der hitzebeständige Träger eine Vielzahl von parallelen Abgasdurchlässen hat, die sich durch ihn hindurch erstrecken und durch Durchlasswände begrenzt sind, auf welche das katalytische Material aufgebracht ist, und die katalytische Komponente etwa 70,6 bis 2188,8 µg/cm³ (2 bis 60 g/ft³) Platin und etwa 176,5 bis 1765,7 µg/cm³ (5 bis 50 g/ft³) Eisen enthält.

25. Katalysatorzusammensetzung nach einem der vorhergehenden Ansprüche, worin der hitzebeständige Träger eine Vielzahl von parallelen Abgasdurchlässen hat, die sich durch ihn hindurch erstrecken und durch Durchlasswände begrenzt sind, auf welche das katalytische Material aufgebracht ist, und weiter fein verteiltes, auf dem katalytischen Material befindliches Platin in einer Menge von etwa 3,5 bis etwa 2118,8 µg/cm³ (etwa 0,1 bis etwa 60 g/ft³) enthält.

26. Katalysatorzusammensetzung nach Anspruch 25, worin das fein verteilte Platin in einer Menge von etwa 3,5 bis 176,5 µg/cm³ (0,1 bis 5 g/ft³) vorhanden ist.

27. Katalysatorzusammensetzung nach Anspruch 23, worin der hitzebeständige Träger eine Vielzahl von parallelen Abgasdurchlässen hat, die sich durch ihn hindurch erstrecken und durch Durchlasswände begrenzt sind, auf welche das katalytische Material aufgebracht ist, und sich wenigstens eine katalytisch wirksame Menge des fein verteilten Platins auf dem Ceroxid befindet.

28. Katalysatorzusammensetzung nach einem der vorhergehenden Ansprüche, worin der hitzebeständige Träger eine Vielzahl von parallelen Abgasdurchlässen hat, die sich durch ihn hindurch erstrecken und durch Durchlasswände begrenzt sind, auf welche das katalytische Material aufgebracht ist, und weiter fein verteiltes, auf dem katalytischen Material befindliches Palladium in einer Menge von 3,5 bis 7062,9 µg/cm³ (0.1 bis 200 g/ft³) enthält.

29. Katalysatorzusammensetzung nach Anspruch 28, worin das fein verteilte Palladium in einer Menge von etwa 706,2 bis 4237,7 µg/cm³ (20 bis 120 g/ft³) vorhanden ist.

30. Verfahren zur Behandlung eines Dieselmotorabgasstroms, der eine flüchtige, organische Fraktion enthält, umfassend das Inberührungbringen des Stroms mit einer Katalysatorzusammensetzung nach einem der Ansprüche 1 bis 29 unter oxidierenden Bedingungen, die eine Temperatur einschließen, die hoch genug ist, um die Oxidation von wenigstens einem Teil der flüchtigen, organischen Fraktion zu katalysieren.

31. Verfahren nach Anspruch 30, worin die Temperatur des Abgasstroms, der anfänglich mit der Katalysatorzusammensetzung in Berührung gebracht wird, etwa 100°C bis 800°C beträgt.

32. Verfahren nach Anspruch 30 oder Anspruch 31 zur Behandlung eines Dieselmotorabgasstroms, der Kohlenwasserstoffe enthält, ausgewählt aus der Gruppe bestehend aus gasförmigen Kohlenwasserstoffen und in einer flüchtigen. organischen Fraktion vorhandenen Kohlenwasserstoffen, umfassend weiter die Schritte:
Absorbieren von wenigstens einem Teil der Kohlenwasserstoffe auf dem Katalysator,
Erhöhen der Temperatur des Abgases und Desorbieren der Kohlenwasserstoffe von dem Katalysator: und
Katalysieren der Oxidation von wenigstens einem Teil der Kohlenwasserstoffe.
